# EUROPEAN PATENT APPLICATION

(11) **EP 4 484 799 A1**
(43) Date of publication of application: **01.01.2025**
(21) Application number: 23760076.2
(22) Date of filing: 22.02.2023
(51) Int. Cl.: F16H 7/12, B25J 17/00, B25J 19/00

(54) **BELT TRANSMISSION MECHANISM**

(30) Priority: 25.02.2022 JP 2022028047; 14.03.2022 JP 2022038993; 26.10.2022 JP 2022171321; 14.11.2022 JP 2022181730; 08.02.2023 JP 2023017716; 08.02.2023 JP 2023017775
(71) Applicant: Mitsuboshi Belting Ltd., Kobe-shi, Hyogo 653-0024 (JP)
(72) Inventor: TAMURA, Masashi, Kobe-shi, Hyogo 653-0024 (JP); OISHI, Satoshi, Kobe-shi, Hyogo 653-0024 (JP)
(74) Representative: Hoffmann Eitle
(86) International application number: PCT/JP2023/006603
(87) International publication number: WO 2023/163077

(57) **Abstract**

The present invention relates to a belt transmission mechanism characterized by comprising: a drive pulley fixed to a drive shaft that is driven by a drive source so as to be rotatable forward and backward; a driven pulley that is rotatably supported; a toothed belt wound around the drive pulley and the driven pulley; and an auto tensioner that automatically maintains appropriate tension of the toothed belt through two tension rollers that are mounted rotatably around base shafts thereof at positions on both sides of a pulley center line connecting the center of rotation of the drive pulley and the center of rotation of the driven pulley, and that contact the toothed belt. The auto tensioner has a swing shaft mounted to extend in a direction parallel to the drive shaft through a point on the pulley center line or a point on an extension line of the pulley center line, and comprises a spring that is stretched between the base shafts of the two tension rollers, and biases the two tension rollers in directions toward or away from each other, along the roller center line. The two tension rollers are configured to be swingable about the swing shaft.

## Description

### TECHNICAL FIELD

The present invention relates to a belt power-transmission system which is incorporated in an arm or the like of an industrial robot and includes an automatic tensioner for automatically and appropriately maintaining tension of a toothed belt when a rotational force of a drive pulley is transmitted to a driven pulley via the toothed belt.

### BACKGROUND ART

In recent years, industrial robots such as vertical articulated robots and horizontal articulated robots (SCARA robots) have been widely used for automobile manufacturing, semiconductor manufacturing, smartphone manufacturing, and the like. In an industrial robot, for an arm drive and a wrist portion drive of the robot (hereinafter, referred to as the "robot arm drive"), a drive by a toothed belt (hereinafter, simply referred to as a "belt power-transmission system for robot arm drive") is adopted instead of a gear drive in order to achieve smaller size, higher speed, lighter weight, and the like.

Generally, in a belt power-transmission system not provided with an automatic tensioner, after a toothed belt (hereinafter, simply referred to as the "belt" in some cases) is attached, a step of adjusting (correcting) a tension drop of the belt occurring at an initial stage of driving (running) by performing idling (breaking-in driving) is required. However, in the belt power-transmission system for robot arm drive, the idling cannot be performed simply by mounting the toothed belt to a pulley in a robot arm due to a structure and a manufacturing process, and thus after the robot is assembled, a tension adjustment operation by idling, called aging, is performed. Due to the aging, several hours must be taken to get the robot into a correct control state, including retensioning the belt (tension adjustment operation) by adjusting an interval (intershaft distance) between a drive pulley and a driven pulley, retightening bolts of respective units, and the like, which causes a large amount of loss cost.

Since a drive of the robot arm involves frequent forward and reverse rotation, (a tight side and a slack side of the belt are reversed each time the belt rotates forward and reverse) at the time of forward and reverse switching (at the time of starting/stopping the forward and reverse rotation), overtension easily occurs on the tight side of the belt, and slack easily occurs on the slack side of the belt. In this way, when the belt becomes overtension or the slack of the belt becomes large, synchronous power-transmission becomes uncertain (a difference in rotation angles of the drive pulley and the driven pulley becomes large), and the arm, a wrist portion, and the like cannot be accurately moved to a predetermined position (influence on a positioning accuracy of the arm and the like).

In a belt power-transmission system in which an interval between pulleys is narrow and a speed reduction ratio (ratio of pulley diameters) is large, a contact angle of the belt becomes small in a drive pulley with a smaller diameter, and if slack of the belt is large, there is a concern that a tooth jump of the belt may easily occur.

In synchronous (meshing) power-transmission by a toothed belt, in order to resolve the above problem, in principle, it is necessary to maintain tension of the belt automatically and appropriately (to an extent that the belt does not slack) (including adjustment of a tension drop occurring at an initial stage of running).

Specifically, in a belt power-transmission system for robot arm drive using a toothed belt, even when a tight side and a slack side of the belt are reversed each time the belt rotates forward and reverse, it is unnecessary to secure very high tension at the tight side of the belt (as in a case of frictional power-transmission) at the time of starting, and thus it is necessary to keep a tension variation to be low without applying a damping force, and on the other hand, it is necessary not to cause the belt to slack (as in the case of frictional power-transmission) at the slack side of the belt.

For this purpose, it is considered to adopt a belt power-transmission system for robot arm drive provided with an automatic tensioner in which by bringing two tension rollers, respectively provided rotatably on both sides sandwiching a pulley center line connecting rotation centers of a drive pulley and a driven pulley, into contact with (an outer circumferential surface or inner circumferential surface of) the belt using a moderate biasing action of a spring or the like, even if a tight side and a slack side of the belt are reversed each time the belt rotates forward or reverse, tension of the belt can be maintained automatically and appropriately (to an extent that the belt does not slack) (including adjustment of a tension drop occurring at an initial stage of running).

### (Technique in Related Art)

As an automatic tensioner provided in a belt power-transmission system for robot arm drive, for example, Patent Literature 1 (see FIG. 1) discloses one having a configuration in which both sides (a tight side and a slack side) of a belt are sandwiched or pressed and widened by two tension rollers (idlers) by a biasing action of one spring (a tension spring or a compression spring) to apply tension to the belt. Patent Literature 2 (see FIG. 1) discloses a belt power-transmission system having a configuration in which both sides (a tight side and a slack side) of the belt are sandwiched between two tension rollers (idlers) by a V-shaped swing arm (however, no spring bias), and tension is applied to the belt.

### CITATION LIST

### PATENT LITERATURE

Patent Literature 1: JPH11-33971A
Patent Literature 2: JP2004-156735A

### SUMMARY OF INVENTION

### TECHNICAL PROBLEM

However, in recent years, as compared with the related art, there is a drastic increase in a requirement for productivity improvement in automobile manufacturing, semiconductor manufacturing, smartphone manufacturing, and the like. Therefore, for an industrial robot, as a requirement for further performance improvement in a robot arm drive unit, there is also an enhanced requirement that "even if a speed of an operation involving forward and reverse rotation increases, a positioning accuracy can be repeatedly ensured (that is, magnitude of a difference in rotation angles of a drive pulley and a driven pulley can be constantly kept within an allowable range), and synchronous power-transmission [tension of the belt is maintained automatically and appropriately (to an extent that the belt does not slack) (including adjustment of a tension drop occurring at an initial stage of running)] can be ensured".

It is known that, under a condition that specifications of a belt and a pulley (meshing between a belt tooth portion and a pulley tooth groove) are fixed, a difference of rotation angles in a robot arm drive unit is maximized at the time of forward and reverse switching (at the time of starting/stopping forward and reverse rotation) (overshoot and undershoot occur at the time of forward and reverse switching).

Therefore, in a belt power-transmission system for robot arm drive, even if a speed of an operation involving forward and reverse rotation increases, in order to repeatedly ensure a positioning accuracy (to ensure synchronous power-transmission), it is important to "ensure responsiveness to a drive at the time of forward and reverse switching (at the time of starting/stopping forward and reverse rotation) at a high level (that is, sufficiently reduce the above rotation angle difference at the time of forward and reverse switching)".

In this regard, as a result of verification in detail in view of the above point of view, it has been known that the automatic tensioner (automatic tensioner in the related art) provided in the belt power-transmission system for robot arm drive as disclosed above is not sufficient to reliably respond to the above recent requirements.

Therefore, an object of the present invention is to provide a belt power-transmission system capable of ensuring synchronous power-transmission even if a speed of an operation involving forward and reverse rotation increases.

### SOLUTION TO PROBLEM

The present invention relates to a belt power-transmission system, including:
a drive pulley fixed to a drive shaft that is driven so as to be capable of forward and reverse rotation by a drive source;
a driven pulley that is rotatably supported;
a toothed belt wound between the drive pulley and the driven pulley; and
an automatic tensioner configured to automatically and appropriately maintain tension of the toothed belt via two tension rollers that are provided rotatably about respective base shaft portions at positions on both sides sandwiching a pulley center line connecting a rotation center of the drive pulley and a rotation center of the driven pulley, and are in contact with the toothed belt, in which
the automatic tensioner includes:
   a swing shaft that passes through a point on the pulley center line or a point on an extension line of the pulley center line and extends in a direction parallel to the drive shaft; and
   a spring that is stretched between the base shaft portions of the two tension rollers and biases the two tension rollers in a direction toward each other or a direction away from each other along a roller center line, and
the two tension rollers are configured to swing about the swing shaft.

The swing shaft may pass through an intersection point of the pulley center line and the roller center line connecting the rotation centers of the two tension rollers.

The swing shaft may pass through the point on the pulley center line or the point on the extension line of the pulley center line, the point being separated toward a drive pulley side from an intersection point of the pulley center line and the roller center line connecting rotation centers of the two tension rollers.

According to the above configuration, in the belt power-transmission system, it is possible to ensure responsiveness to a drive at the time of forward and reverse switching (at the time of starting/stopping forward and reverse rotation) at a high level (that is, it is possible to sufficiently reduce a rotation angle difference between the drive pulley and the driven pulley at the time of forward and reverse switching), and even if a speed of an operation involving forward and reverse rotation increases, it is possible to ensure synchronous power-transmission [to maintain tension of the belt automatically and appropriately (to an extent that the belt does not slack) (including adjustment of a tension drop occurring at an initial stage of running)].

The automatic tensioner may include a swing holder that slidably accommodates the respective base shaft portions of the two tension rollers along the roller center line and is rotatably supported with respect to the swing shaft, and
the two tension rollers may swing about the swing shaft via the swing holder.

According to the above configuration, the respective base shaft portions of the two tension rollers between which the spring is stretched are slidable along the roller center line (along a biasing direction of the spring), and the swing holder itself that accommodates the two slidable base shaft portions is rotatable about the swing shaft (the swing shaft that passes through the intersection point between the roller center line and the pulley center line and extends in the direction parallel to the drive shaft), so that it is possible to specifically implement an aspect in which the two tension rollers swing in a plane about the swing shaft in addition to the biasing action of the spring.

In the above belt power-transmission system of the present invention,
the automatic tensioner may include:
   a first swing arm in which one end portion thereof is provided with the base shaft portion of one of the tension rollers, and the other end portion is rotatably supported with respect to the swing shaft; and
   a second swing arm in which one end portion thereof is provided with the base shaft portion of the other tension roller, and the other end portion is rotatably supported with respect to the swing shaft, and
the two tension rollers may swing about the swing shaft via the first swing arm and the second swing arm.

According to the above configuration, each of the two swing arms (the first swing arm and the second swing arm) including, on one end portion (tip end portion), the base shaft portion of each of the two tension rollers between which the spring is stretched is rotatable about the swing shaft (the swing shaft that passes through the point on the pulley center line or the point on the extension line of the pulley center line, and extends along the direction parallel to the drive shaft, the point being separated toward the drive pulley side from the intersection point of the roller center line and the pulley center line), so that it is possible to specifically implement the aspect in which the two tension rollers swing about the swing shaft in addition to the biasing action of the spring.

In the above belt power-transmission system of the present invention,
the spring may be a tension spring, and
the two tension rollers may be provided so as to be in contact with an outer circumferential surface of the toothed belt.

According to the above configuration, both sides (a tight side and a slack side) of the belt are sandwiched between the two tension rollers by the biasing action of one spring (the tension spring). Therefore, as compared with a configuration in which the spring is a compression spring and the two tension rollers are provided so as to be in contact with an inner circumferential surface of the toothed belt (in a case of an aspect in which both sides of the belt are pressed and widened by the two tension rollers by a biasing action of one compression spring), occurrence of a tooth jump of the belt can be prevented by increasing a contact angle of the belt (a central angle with respect to an arc where the belt and the pulley come into contact with each other).

In the above belt power-transmission system of the present invention,
the two tension rollers may be provided on a drive pulley side or on a pulley side where the pulley has a smaller diameter out of the drive pulley and the driven pulley.

In the belt power-transmission system, in order to ensure a rotational torque of the driven pulley at a predetermined level, a diameter of the drive pulley is generally smaller than a diameter of the driven pulley (when the belt power-transmission system functions as a so-called speed reduction system), but there are cases where the diameters of the drive pulley and the driven pulley are the same. For example, in a belt power-transmission system in which an interval between pulleys is narrow and a speed reduction ratio (ratio of pulley diameters) is large, a contact angle of the belt becomes small in a drive pulley with a smaller diameter, and if slack of the belt is large, there is a concern that a tooth jump of the belt is likely to occur, but according to the present configuration, in the drive pulley (including the case where the drive pulley and the driven pulley have the same diameter) or in the pulley with a smaller diameter (regardless of a drive or driven side), it is possible to prevent a decrease in the contact angle of the belt, and thus the tooth jump of the belt can be difficult to occur.

In the above belt power-transmission system of the present invention,
a diameter of the drive pulley may be smaller than a diameter of the driven pulley.

According to the above configuration (that is, in the case where the belt power-transmission system is the speed reduction system), compared with the case where the diameter of the drive pulley is the same as the diameter of the driven pulley, the two tension rollers swing about the swing shaft at the time of forward and reverse switching, thereby increasing a degree of displacement.

Therefore, according to the configuration, compared with a configuration in which the two tension rollers cannot swing about the swing shaft (only the biasing force of the spring acts on the two tension rollers) and the two tension rollers can be displaced only in a direction orthogonal to the pulley center line when viewed in a direction parallel to the drive shaft, it is possible to further increase an effect that one of the tension rollers can be more quickly displaced by swinging about the swing shaft while preventing attenuation by the spring (displacement in a direction for resisting the biasing force of the spring) on the tight side of the belt. Further, in the belt power-transmission system, the responsiveness to the drive at the time of forward and reverse switching (at the time of starting/stopping forward and reverse rotation) can be ensured at a higher level.

The present invention may be the above belt power-transmission system in which the drive pulley and the driven pulley are fixed to a robot arm and drive the robot arm.

According to the above configuration, when the robot arm is driven, even if the speed of the operation involving the forward and reverse rotation increases in the belt power-transmission system, a positioning accuracy of the robot arm can be repeatedly ensured (that is, magnitude of a difference of the rotation angles between the drive pulley and the driven pulley can be constantly kept within an allowable range), and synchronous power-transmission can be ensured.

### ADVANTAGEOUS EFFECTS OF INVENTION

It is possible to provide a belt power-transmission system capable of ensuring synchronous power-transmission even if a speed of an operation involving forward and reverse rotation increases.

### BRIEF DESCRIPTION OF DRAWINGS

FIG. 1 is a diagram illustrating a belt power-transmission system for robot arm drive according to a first embodiment incorporated in a robot arm of a horizontal articulated robot.
FIG. 2 is a plan view of the belt power-transmission system for robot arm drive according to the first embodiment (a diagram illustrating a state in which a drive pulley is stopped).
FIG. 3 is a cross-sectional view/left side view taken along a line A-A in FIG. 2.
FIG. 4 is a composite view of a cross-sectional view taken along a line B-B in FIG. 2 and a cross-sectional view taken along a line C-C in FIG. 2.
FIG. 5 is a plan view of the belt power-transmission system for robot arm drive according to the first embodiment (a diagram illustrating an operation state of an automatic tensioner at the time of forward and reverse switching).
FIG. 6 is a diagram illustrating a belt power-transmission system for robot arm drive according to a second embodiment incorporated in a robot arm of a horizontal articulated robot.
FIG. 7 is a plan view of the belt power-transmission system for robot arm drive according to the second embodiment (a diagram illustrating a state in which a drive pulley is stopped).
FIG. 8 is a cross-sectional view/left side view taken along a line A-A in FIG. 7.
FIG. 9 is a cross-sectional view taken along a line B-B in FIG. 7.
FIG. 10 is a plan view of the belt power-transmission system for robot arm drive according to the second embodiment (a diagram illustrating an operation state of an automatic tensioner at the time of forward and reverse switching).
FIG. 11 is a cross-sectional perspective view of a toothed belt according to the present embodiment.
FIG. 12 is a diagram illustrating a responsiveness evaluation tester according to Example.
FIG. 13 is a diagram illustrating a test pattern (cycle pattern) of a responsiveness test according to Example.
FIG. 14 is a configuration diagram of an automatic tensioner according to Comparative Example B4.
FIG. 15 is a plan view of a belt power-transmission system for robot arm drive according to another embodiment.

### DESCRIPTION OF EMBODIMENTS

### (Embodiments)

The present embodiment is an example of applying the present invention to a belt power-transmission system for robot arm drive 1 (hereinafter, simply referred to as the "belt power-transmission system 1" in some cases) which is incorporated in a second arm 11 of a horizontal articulated robot 10 (industrial robot) called a SCARA robot and provided with an automatic tensioner 5 for automatically and appropriately maintaining tension of a toothed belt 4 when a rotational force of a drive pulley 2 is transmitted to a driven pulley 3 via the toothed belt 4.

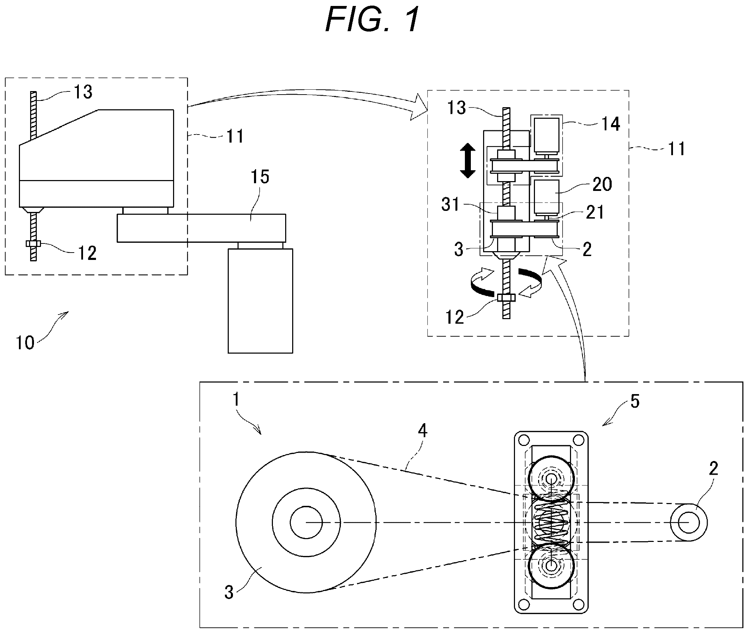

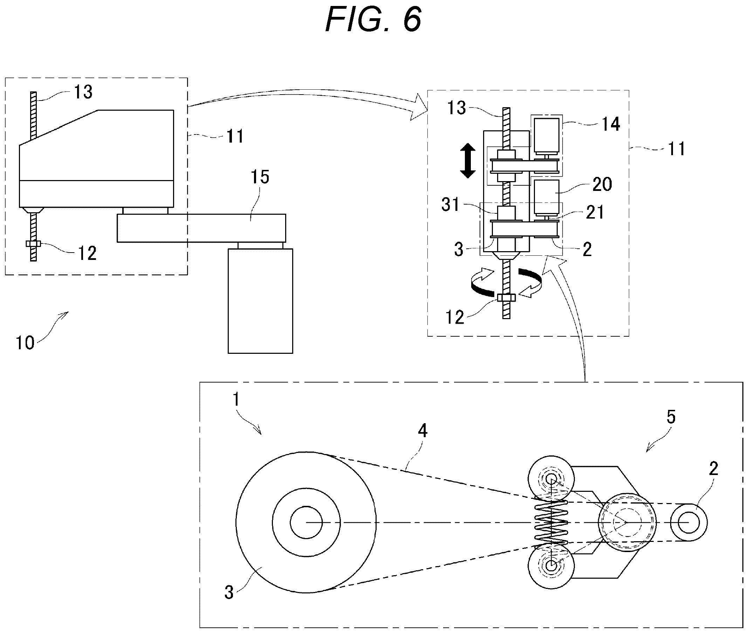

For example, as illustrated in FIG. 1 and FIG. 6, the belt power-transmission system 1 of the present embodiment is incorporated as a belt-type speed reduction system for driving forward and reverse rotation of a ball screw spline shaft 13 via a driven shaft 31 coaxial with the ball screw spline shaft 13, the ball screw spline shaft 13 being provided to be movable up and down and rotatable coaxially with a wrist portion 12 (not illustrated in detail) which is detachably attached to a lower end side in a tip end portion of the second arm 11 of the horizontal articulated robot 10 and extends in an up-down direction. The up-down movement of the ball screw spline shaft 13 is performed by an up-down movement drive system 14. The belt power-transmission system 1 incorporated as a belt-type speed reduction system can drive the forward and reverse rotation of the ball screw spline shaft 13 while allowing the up-down movement of the ball screw spline shaft 13 by the up-down movement drive system 14 and in a non-rotation state.

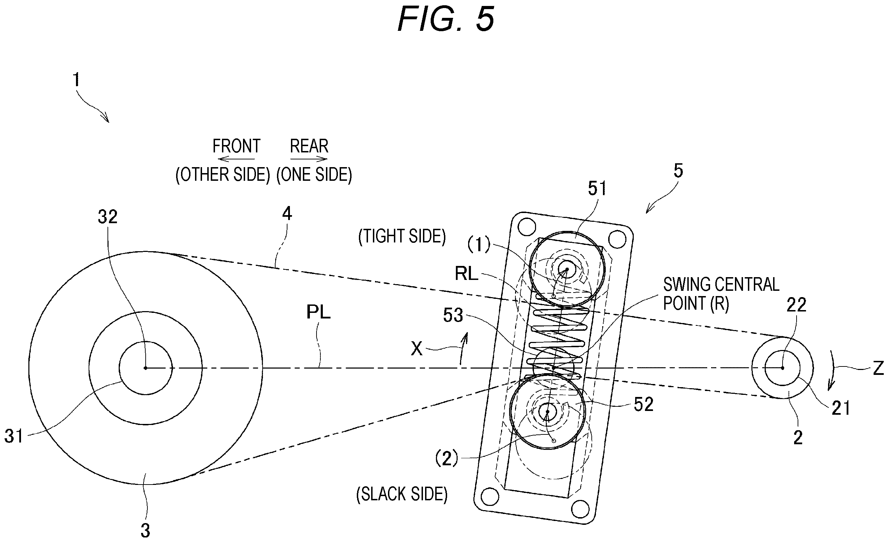

In a case of a robot main body illustrated in FIG. 5 of Patent Literature 2, the belt power-transmission system 1 according to the present embodiment can be incorporated as a T-axis rotation transmission system (a second stage system of a two-stage speed reduction method) that coaxially rotates, in forward and reverse directions using a forward and reverse rotation drive of a T-axis servo motor (T-axis pulley), an up-down arm extending in an up-down direction at a tip end portion of a second arm and provided to be movable up and down and coaxially rotatable.

### (belt power-transmission system 1)

As illustrated in FIGs. 1, 2, 6, and 7, the belt power-transmission system 1 includes: the drive pulley 2 that is disposed at a rear side (end portion on one side) of the second arm 11 and transmits a driving force of a servo motor 20 (a drive source: a servo motor provided in a first stage belt-type speed reduction system when applied to a second stage system of a two-stage speed reduction method) via a drive shaft 21 (a drive shaft of a second stage belt-type speed reduction system, extending coaxially with a driven shaft (not illustrated) of the first stage belt-type speed reduction system when applied to the second stage system of the two-stage speed reduction method); the driven pulley 3 that is disposed on a front side (end portion on the other side) of the second arm 11 and transmits a driving force to a driven shaft 31 connected to the ball screw spline shaft 13 to which the wrist portion 12 is mounted; the toothed belt 4 that is endlessly wound between the drive pulley 2 and the driven pulley 3; and the automatic tensioner 5 that automatically and appropriately maintains tension of the toothed belt 4 via a first tension roller 51 and a second tension roller 52 which are rotatably provided.

In FIG. 1 and FIG. 6, a base end side (a side connected to a first arm 15) of the second arm 11 is referred to as the rear side (one side), and a tip end side (a side connected to the ball screw spline shaft 13 to which the wrist portion 12 is mounted) of the second arm 11 is referred to as the front side (the other side).

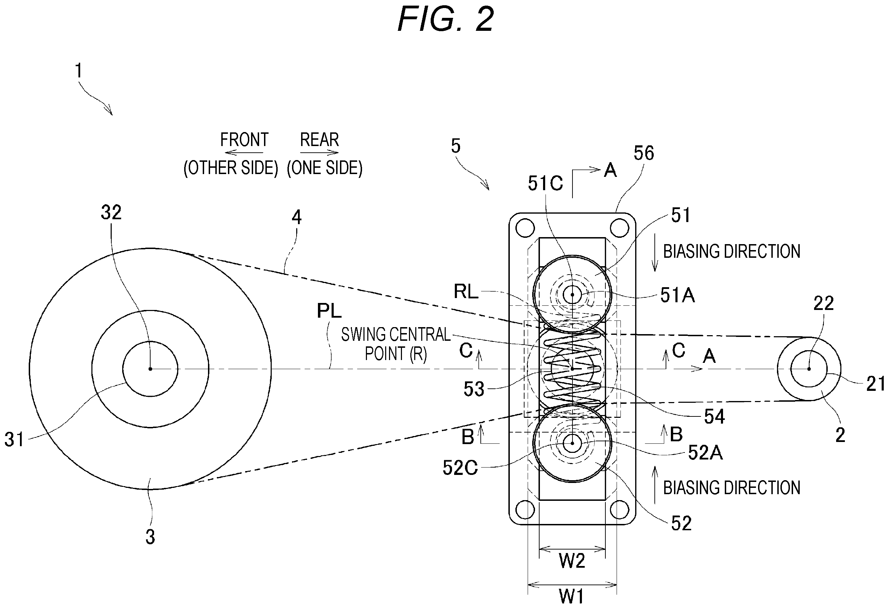

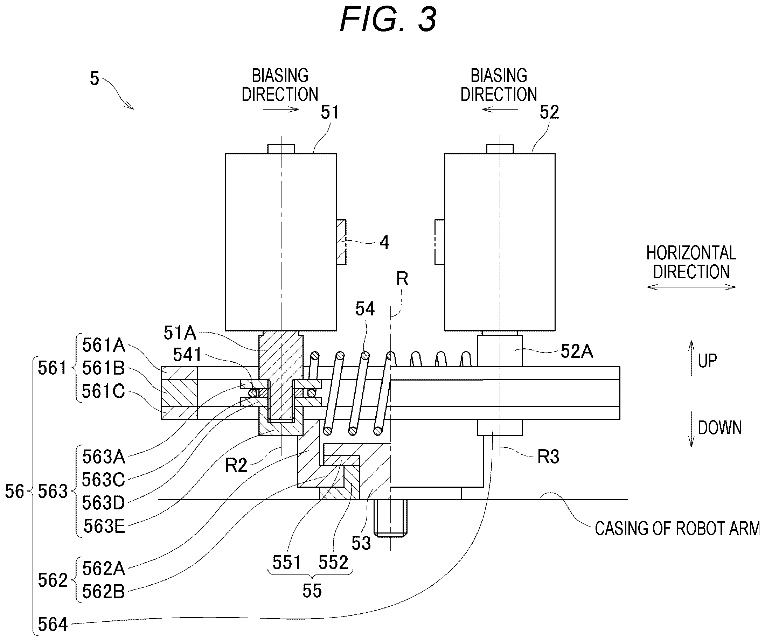

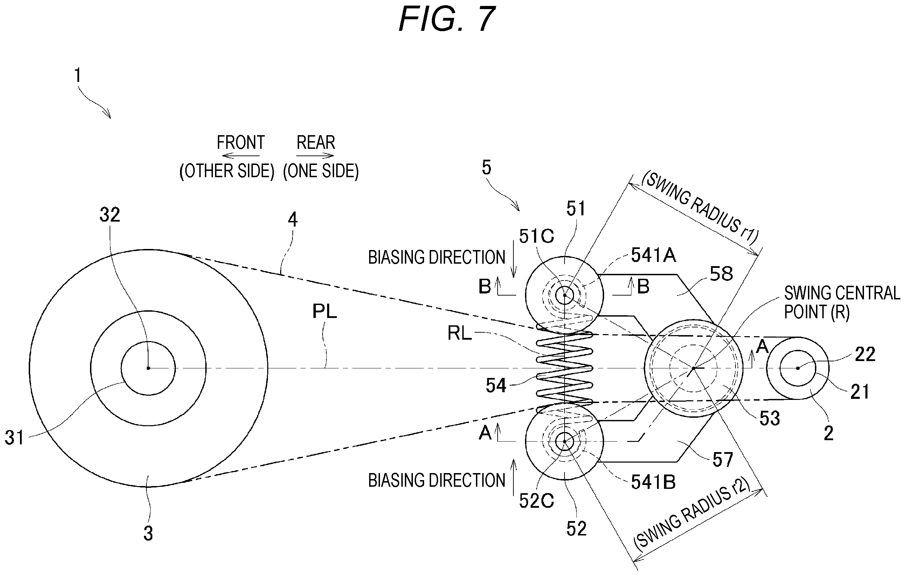

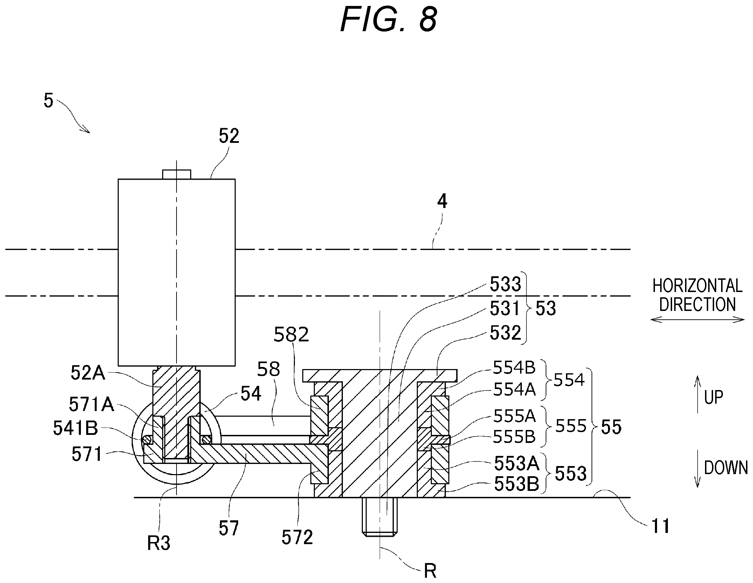

In FIG. 2 and FIG. 7, a left side is defined as the front (the other side), and a right side is defined as the rear (one side). In FIG. 3 and FIG. 8, a radial direction about a central axis R of a swing shaft 53 is simply defined as a radial direction, and a circumferential direction about the central axis R is simply defined as a circumferential direction. In FIGs. 3,4, 8, and 9, the up-down direction is defined as the up-down direction, and a left-right direction is defined as a horizontal direction.

### (Drive Pulley 2 and Driven Pulley 3)

The drive pulley 2 is fixed to the drive shaft 21 that is driven by the driving force of the servo motor 20 so as to be capable of forward and reverse rotation. The driven pulley 3 is fixed to the driven shaft 31 to which the ball screw spline shaft 13 is connected.

The drive pulley 2 and the driven pulley 3 are toothed pulleys. Grooves (not illustrated) each having a shape corresponding to a tooth shape (for example, a tooth shape referred to as a general straight tooth) of a tooth portion of the toothed belt 4 are formed on outer circumferences of the drive pulley 2 and the driven pulley 3. In the present embodiment, the grooves formed on the outer circumferences of the drive pulley 2 and the driven pulley 3 have a shape corresponding to the straight tooth and extend in a direction of the driven shaft 31.

An intershaft distance between the drive pulley 2 and the driven pulley 3 is fixed and cannot be adjusted, and is, for example, about 80 mm to 300 mm (220 mm in the present embodiment).

A speed ratio of the drive pulley 2 to the driven pulley 3 (a diameter of the driven pulley 3/a diameter of the drive pulley 2) is, for example, about 1 to 4. In the present embodiment, the driven pulley 3 has a pitch diameter about four times larger than that of the drive pulley 2 so that the speed ratio (speed reduction ratio) is 4. Tension of the belt when the toothed belt 4 is stationary (tension of the belt when the drive pulley 2 is stopped) is, for example, about 1 N/belt 1 mm width to 5 N/belt 1 mm width (in the present embodiment, 5 N/belt 1 mm width) at a level at which the toothed belt 4 does not slack.

An allowable range of a rotation angle difference between the drive pulley 2 and the driven pulley 3 (maximum at the time of forward and reverse switching) is determined by a design aspect. The above "rotation angle difference" is an index (substitute characteristic) representing responsiveness, and is "magnitude of a difference in rotation angles (°) of the drive pulley and the driven pulley".

### (Toothed Belt 4)

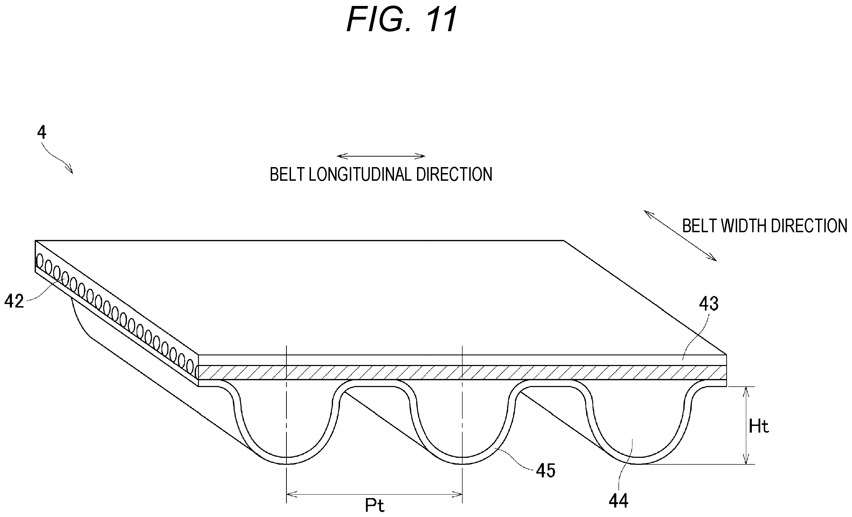

As illustrated in FIG. 11, the toothed belt 4 includes a back portion 43 in which tension members 42 are spirally embedded along a belt longitudinal direction, and a plurality of tooth portions 44 arranged at predetermined intervals along the belt longitudinal direction on an inner circumferential surface of the back portion 43 (corresponding to one surface of the back portion 43). In the present embodiment, the plurality of tooth portions 44 are integrally formed on the inner circumferential surface of the back portion 43. Each of the tooth portions 44 extends along a belt width direction (that is, the tooth portion 44 is a straight tooth). An inner circumferential surface of the toothed belt 4, that is, a surface of the tooth portion 44 and a part (a portion where the tooth portion 44 is not provided) of the inner circumferential surface of the back portion 43 are composed of (covered with) the tooth fabric 45. An outer circumferential surface of the back portion 43 (corresponding to the other surface of the back portion 43) is not covered with fabric or the like (backing fabric).

An interval (tooth pitch Pt) between the tooth portions 44 adjacent to each other in the belt longitudinal direction is preferably a relatively small value, for example, about 2 mm to 5 mm (in the present embodiment, 3 mm) from a viewpoint of repeatedly ensuring a positioning accuracy (ensuring synchronous power-transmission) even if a speed of an operation involving the forward and reverse rotation increases. The numerical value of the tooth pitch Pt also corresponds to a size of a scale of the tooth portion 44 (a length of the tooth portion 44 in the belt longitudinal direction and a tooth height Ht of the tooth portion 44). That is, the larger the tooth pitch Pt is, similarly the larger the scale of the tooth portion 44 is.

The length (circumferential length) of the toothed belt 4 in the belt longitudinal direction is, for example, about 200 mm to 800 mm (about 600 mm in the present embodiment).

A length (width) of the toothed belt 4 in the belt width direction is, for example, about 6 mm to 35 mm (10 mm in the present embodiment).

### (Back Portion 43 and Tooth Portion 44)

The back portion 43 and the tooth portion 44 of the toothed belt 4 are made of a rubber composition, and as a rubber component of the rubber composition, chloroprene rubber (CR), nitrile rubber, hydrogenated nitrile rubber (HNBR), ethylene-propylene copolymer (EPM), ethylene-propylene-diene terpolymer (EPDM), styrene-butadiene rubber, butyl rubber, chlorosulfonated polyethylene rubber, or the like is used. These rubber components may be used alone or in combination. The rubber components of the rubber compositions constituting the back portion 43 and the tooth portion 44 are preferably chloroprene rubber from a viewpoint of particularly low cost (chloroprene rubber in the present embodiment). The rubber compositions constituting the tooth portion 44 and the back portion 43 may be made of the same rubber composition or different rubber compositions. The rubber compositions constituting the back portion 43 and the tooth portion 44 may contain various commonly used additives (or compounding agents) as necessary. Hardness of the rubber composition (tooth rubber) constituting the tooth portion 44 is preferably about 73° to 83° as a hardness measured using a type A durometer at an atmospheric temperature of 23°C (23°C ± 2°C) in accordance with JIS K6253 (2012) from a viewpoint of ensuring transmission performance (particularly tooth jump resistance) of the toothed belt 4.

### (Tooth Shape of Tooth Portion 44)

The tooth shape of the tooth portion 44 of the toothed belt 4 may be a tooth shape referred to as a general straight tooth or a tooth shape referred to as a helical tooth (tooth with an oblique contact angle of a tooth surface) as long as synchronous power-transmission (meshing transmission) is possible. The toothed belt 4 used in the belt power-transmission system 1 of the present embodiment has straight teeth.

As the tooth shape belonging to the straight tooth, it is possible to appropriately select a tooth shape suitable for an application of the belt power-transmission system, such as a well-known tooth shape as described below, a deformed shape thereof, or a special shape. Examples include a shape referred to as an H-tooth shape having a substantially semicircular cross section, a shape referred to as a T-tooth shape having a trapezoidal cross section, and a shape referred to as an S-tooth shape (STPD type) in which two side surfaces each including a convex curved surface (arc surface) bulging outward are connected by a flat surface. From a viewpoint of ensuring transmission performance (particularly a transmission capability and tooth jump resistance) of the toothed belt 4, it is preferable to increase a rigidity of the tooth portion 44, and it is preferable that the tooth shape is an H-tooth shape (a shape having a substantially semicircular cross-section) (H-tooth shape also in the present embodiment).

### (Tension Member 42)

The tension member 42 is constituted by a twisted cord formed by twisting a plurality of strands. One strand may be formed by bundling and aligning filaments (long fibers). From a viewpoint of enhancing the responsiveness to the drive at the time of forward and reverse switching in the belt power-transmission system 1, a material of the filament is preferably high strength (high elastic modulus) and low elongation, and examples thereof include an alkali-free glass fiber (E glass fiber), a high-strength glass fiber, or a carbon fiber. From a viewpoint of low cost, an alkali-free glass fiber (E glass fiber) is more preferable. A diameter of the tension member 42 is preferably small from a viewpoint of improving bendability of the toothed belt 4 (flexibility of the toothed belt 4 when the toothed belt 4 is wound across the drive pulley 2 and the driven pulley 3), that is, from a viewpoint of preventing speed unevenness of the toothed belt 4 due to up-down movement of a belt pitch line and ensuring a high positioning accuracy. The diameter of the tension member 42 is, for example, about 0.15 mm to 0.60 mm (in the present embodiment, a tension member diameter is 0.35 mm when the tension member type is an E glass fiber and a K glass fiber, and a tension member diameter is 0.53 mm when the tension member type is carbon fiber).

As the high-strength glass fiber, for example, a glass fiber having a tensile strength of 300 kg/cm² or more, in particular, a glass fiber having a higher content of Si component than that of the alkali-free glass fiber (E glass fiber) as shown in Table 1 can be suitably used.

Table 1 also shows the composition of the E glass fiber for comparison. Examples of such a high-strength glass fiber include a K glass fiber, a U glass fiber (both manufactured by Nippon Glass Fiber Co., Ltd.), a T glass fiber (manufactured by Nitto Boseki Co., Ltd.), an R glass fiber (manufactured by Vetrotex), an S glass fiber, an S-2 glass fiber, and a ZENTRON glass fiber (all manufactured by Owens Corning Fiberglass).

**Table 1**

| Component item | High-strength glass fiber | E glass fiber |
|---|---|---|
| SiO₂ | 58 to 70 | 52 to 56 |
| Al₂O₃ | 17 to 27 | 12 to 16 |
| MgO | 7 to 17 | 0 to 6 |
| CaO | 0 to 10 | 12 to 25 |
| Na₂O | 0 to 2 | 0 to 0.8 |
| K₂O | 0 to 2 | 8 to 13 |
| B₂O₃ | 0 to 2 | |
| | Including impurities such as Fe₂O₃ and TiO₂ | |

Examples of the carbon fiber include a pitch-based carbon fiber, a polyacrylonitrile (PAN)-based carbon fiber, a phenolic resin-based carbon fiber, a cellulose-based carbon fiber, and a polyvinyl alcohol-based carbon fiber. Examples of a commercially available product of the carbon fiber include "Torayca (registered trademark)" manufactured by Toray Industries, Inc., "Tenax (registered trademark)" manufactured by Toho Tenax Co., Ltd., and "DIALEAD (registered trademark)" manufactured by Mitsubishi Chemical Corporation. These carbon fibers may be used alone or in combination of two or more thereof. Among these carbon fibers, the pitch-based carbon fiber and the PAN-based carbon fiber are preferable, and the PAN-based carbon fiber is particularly preferable.

The twisted cord used as the tension member 42 is preferably subjected to an adhesion treatment in order to enhance the adhesion to the back portion 43. As the adhesion treatment, for example, a method is adopted in which the twisted cord is immersed in a resorcin-formalin-latex treatment liquid (RFL treatment liquid) and then heated and dried to uniformly form an adhesion layer on a surface. The RFL treatment liquid is obtained by mixing an initial condensate of resorcin and formalin with latex, and examples of the latex used here include chloroprene, styrene-butadiene-vinylpyridine ternary copolymer (VP latex), hydrogenated nitrile, and NBR. Examples of the adhesion treatment include a method in which a pretreatment is performed with an epoxy or isocyanate compound, and then a treatment is performed with the RFL treatment liquid.

The tension members 42 are spirally embedded in the back portion 43 along the belt longitudinal direction at a predetermined interval in the belt width direction. That is, the tension members 42 are arranged at the back portion 43 at the predetermined interval in the belt width direction.

### (Tooth Fabric 45)

From a viewpoint of wear resistance and the like, the tooth fabric 45 is preferably formed of woven fabric woven by intersecting warp yarns and weft yarns vertically and horizontally according to a certain rule. In the tooth fabric 45, it is preferable to arrange the warp yarns of the woven fabric in the belt width direction and the weft yarns in the belt longitudinal direction. Accordingly, elasticity of the tooth fabric 45 in the belt longitudinal direction can be ensured. The tooth fabric 45 may be arranged such that the weft yarn of the woven fabric extends in the belt width direction and the warp yarn extends in the belt longitudinal direction. In this case, an elastic yarn having elasticity may be used as the warp yarn. As a material of the fiber constituting the tooth fabric 45, any one or a combination of nylon, aramid, polyester, polybenzoxazole, cotton, and the like can be adopted.

The woven fabric used as the tooth fabric 45 may be subjected to the adhesion treatment in order to enhance adhesion to the back portion 43 and the tooth portion 44. As the adhesion treatment, a method in which the woven fabric is immersed in resorcin-formalin-latex (RFL liquid) and then heated and dried to uniformly form an adhesion layer on the surface is generally used.

### (Method for Producing Toothed Belt 4)

The toothed belt 4 according to the present embodiment is produced by, for example, the following method (press-fitting method). First, fiber fabric forming the tooth fabric 45 is wound around an outer circumferential surface of a cylindrical mold having a plurality of grooves (recessed strips) corresponding to the tooth portions 44 of the toothed belt 4. Subsequently, the twisted cord constituting the tension member 42 is spirally wound around the outer circumferential surface of the wound fiber fabric at a predetermined pitch (so as to have a predetermined pitch in an axial direction of the cylindrical mold). Further, an unvulcanized rubber sheet for forming the back portion 43 and the tooth portion 44 is wound around the outer circumferential side thereof to form an unvulcanized belt molded body (unvulcanized laminate).

Next, in a state in which the unvulcanized belt molded body is disposed on the outer circumference of the cylindrical mold, a rubber jacket which is a vapor blocking material is further covered on the outside of the unvulcanized belt molded body. Subsequently, the cylindrical mold and the belt molded body covered with the jacket are accommodated in a vulcanization device such as a vulcanization can. Then, when the belt molded body is heated and pressurized inside the vulcanization device, the rubber composition of the unvulcanized rubber sheet and the fiber fabric are pressed into the grooves (recessed strips) of the cylindrical mold to form tooth portions having a desired shape, and the rubber composition of the unvulcanized rubber sheet is vulcanized to form a sleeve-shaped vulcanized molded body (vulcanized belt sleeve) in which the rubber composition, the fiber fabric, and the tension member are integrated. In this case, the fiber fabric extends along a contour shape of the tooth portion 44 to become the tooth fabric 45 disposed on the surface of the tooth portion 44. A plurality of toothed belts 4 are obtained by cutting the vulcanized belt sleeve removed from the cylindrical mold to a predetermined width. In this method (press-fitting method), the same rubber composition is used as the rubber composition constituting the back portion 43 and the tooth portion 44.

### (Automatic Tensioner 5 of First Embodiment)

Hereinafter, a first embodiment of the present invention will be described. As illustrated in FIG. 2 to FIG. 4, the automatic tensioner 5 of the first embodiment includes a swing holder 56 that accommodates a first base shaft portion 51A on which a first tension roller 51 is rotatably provided and a second base shaft portion 52A on which a second tension roller 52 is rotatably provided, so as to be slidable along a roller center line RL (along a biasing direction of a spring 54) that connects a rotation center 51C of the first tension roller 51 and a rotation center 52C of the second tension roller 52; the swing shaft 53 that rotatably supports the swing holder 56 via a sliding member 55 (bearing); and the spring 54 that biases the first base shaft portion 51A and the second base shaft portion 52A in a direction toward each other along the roller center line RL.

In the present embodiment, in the automatic tensioner 5, the two tension rollers (the first tension roller 51 and the second tension roller 52) are provided not on a driven pulley 3 side but on a drive pulley 2 side. In the automatic tensioner 5, the two tension rollers (the first tension roller 51 and the second tension roller 52) may be provided on a pulley side where the pulley has a smaller diameter out of the drive pulley 2 and the driven pulley 3. Here, "the two tension rollers are provided on the drive pulley 2 side" means that an intersection point of the roller center line RL and the pulley center line PL is located on the drive pulley 2 side with respect to a center of the pulley center line PL.

### (First Tension Roller 51 and Second Tension Roller 52)

The first tension roller 51 is a cylindrical roller member rotatably supported about a central axis R2 by the first base shaft portion 51A via a rolling bearing (not illustrated). The second tension roller 52 is also a cylindrical roller member rotatably supported about a central axis R3 by the second base shaft portion 52A via a rolling bearing (not illustrated).

As illustrated in FIG. 2, the first tension roller 51 and the second tension roller 52 are provided on the drive pulley 2 side and are provided rotatably about the first base shaft portion 51A and the second base shaft portion 52A, respectively, at positions on both sides sandwiching the pulley center line PL connecting a rotation center 22 of the drive pulley 2 and a rotation center 32 of the driven pulley 3, and the first tension roller 51 and the second tension roller 52 can come into contact with an outer circumferential surface of the toothed belt 4.

### (First Base Shaft Portion 51A and Second Base Shaft Portion 52A)

As illustrated in FIG. 3, the first base shaft portion 51A is a base end portion that rotatably supports the first tension roller 51 about the central axis R2 via the rolling bearing (not illustrated). In the first base shaft portion 51A, a male threaded portion to be inserted into a hole provided in a slid member 563 to be described later extends downward.

The second base shaft portion 52A has the same configuration as the first base shaft portion 51A.

### (Swing Shaft 53)

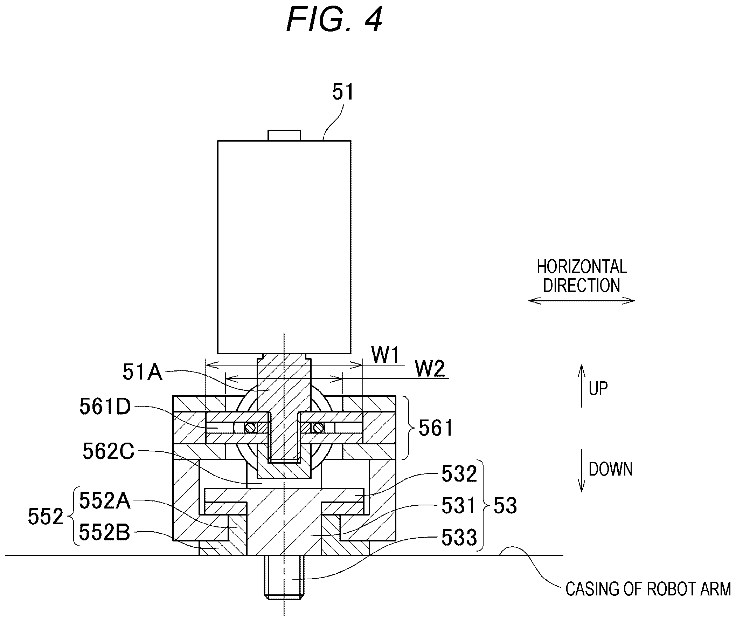

As illustrated in FIG. 4, the swing shaft 53 is a metal component including a cylindrical trunk portion 531 extending in the up-down direction, a flange portion 532 extending outward in the radial direction from an upper end of the trunk portion 531, and a fastening portion 533 extending below from a center portion of an end surface at a lower portion (lower end surface) of the trunk portion 531, which are integrally formed.

As illustrated in FIG. 2, the swing shaft 53 is fixed to a casing (female threaded portion) of the second arm 11 of the horizontal articulated robot 10 via the fastening portion 533 (male threaded portion) in such a manner that the central axis R of the swing shaft 53 passes through the intersection point of the pulley center line PL and the roller center line RL connecting the rotation center 51C of the first tension roller 51 and the rotation center 52C of the second tension roller 52 and extends in a direction parallel to the drive shaft 21. An outer circumferential surface of the trunk portion 531 and a lower end surface of the flange portion 532 are in surface contact with the sliding member 55 (bearing), and the swing shaft 53 rotatably supports the swing holder 56 via the sliding member 55 (bearing).

### (Spring 54)

The spring 54 is a tension spring in the present embodiment.

The tension spring is stretched between the first base shaft portion 51A and the second base shaft portion 52A in a state in which the tension spring is stretched in a direction where the tension spring becomes longer than a natural length thereof (a state in which a self-elastic recovery force acts in a contraction direction), and biases the first base shaft portion 51A and the second base shaft portion 52A in a direction toward each other along the roller center line RL. That is, the spring 54 biases the first tension roller 51, which is rotatably provided on the first base shaft portion 51A, and the second tension roller 52, which is rotatably provided on the second base shaft portion 52A, in a direction toward each other along the roller center line RL.

As illustrated in FIG. 2, the tension spring is employed when the first tension roller 51 and the second tension roller 52 are used in a manner of being in contact with the outer circumferential surface of the toothed belt 4.

A compression spring may be employed as the spring 54. The compression spring is mounted between the first base shaft portion 51A and the second base shaft portion 52A in a state in which the compression spring is compressed in a direction where the compression spring becomes shorter than a natural length thereof (a state in which a self-elastic recovery force acts in an extending direction), and is used when the first base shaft portion 51A and the second base shaft portion 52A are biased in a direction away from each other along the roller center line RL. Specifically, the compression spring is employed when the first tension roller 51 and the second tension roller 52 are disposed at an inner circumferential side of the toothed belt 4, and the first tension roller 51 and the second tension roller 52 are in contact with the inner circumferential surface of the toothed belt 4.

As in the present embodiment, when a tension spring is used as the spring 54, the two tension rollers (the first tension roller 51 and the second tension roller 52) sandwich both sides (the tight side and the slack side) of the toothed belt 4 by a biasing action of one spring 54 (tension spring). Therefore, as compared with a configuration in which the spring 54 is a compression spring and the two tension rollers (the first tension roller 51 and the second tension roller 52) are provided to come into contact with the inner circumferential surface of the toothed belt 4 (a case of an aspect in which both sides of the toothed belt 4 are pressed and widened by the two tension rollers by a biasing action of one compression spring), a contact angle of the toothed belt 4 (a central angle with respect to an arc where the belt and the pulley come into contact with each other) becomes large, and thus it is possible to prevent the tooth jump of the toothed belt 4 from occurring.

The spring 54 is preferably a coil spring so that predetermined spring characteristics can be repeatedly obtained for each belt power-transmission system 1, and a coil spring is also used in the present embodiment.

A spring wire is preferably a spring oil-tempered wire having a circular cross section or the like in accordance with JIS G3560: 1994, and the present embodiment employs a spring oil-tempered wire having a circular cross section according to the above standard.

A diameter of the spring wire and a winding diameter and a winding length (natural length) of the spring are designed and determined such that predetermined spring characteristics are repeatedly obtained for each belt power-transmission system 1 (particularly, for each level of tension of the belt).

In the present embodiment, in order to facilitate stretching of the spring 54 between the first base shaft portion 51A and the second base shaft portion 52A, end portions (hereinafter, referred to as "spring end portions 541") of the spring 54 corresponding to substantially one turn parts of ends of the spring 54 are bent by about 90° in the same direction.

### (Swing Holder 56)

As illustrated in FIG. 3, the swing holder 56 includes a sliding base 561, a swing base 562, and slid members 563 and 564, and the sliding base 561 and the swing base 562 are integrally formed (in the present embodiment, integrally formed by welding).

The swing holder 56 slidably accommodates the first base shaft portion 51A and the second base shaft portion 52A along the roller center line RL, and is rotatably supported with respect to the swing shaft 53 via the sliding member 55 (bearing).

### (Sliding Base 561)

As illustrated in FIG. 3 and FIG. 4, the sliding base 561 slidably accommodates the first base shaft portion 51A and the second base shaft portion 52A, between which the spring 54 is stretched, along the roller center line RL (along the biasing direction of the spring 54). The sliding base includes an upper frame 561A, a lower frame 561C, and a middle frame 561B sandwiched between the upper frame 561A and the lower frame 561C in the up-down direction, each of which is a flat metal component made of aluminum alloy casting (for example, ADC12), and overall shape is a square shape when viewed from above (an outer outline is rectangular, but an inner portion is hollow and only the outer frame portions remains), and the lower frame 561C, the middle frame 561B, and the upper frame 561A are integrally formed and stacked in this order from below (in the present embodiment, four corners are hinged and integrated when viewed from above).

A longitudinal direction of the sliding base 561 (the lower frame 561C, the middle frame 561B, and the upper frame 561A) is a direction parallel to the biasing direction of the spring 54 (the sliding direction of the first base shaft portion 51A and the second base shaft portion 52A) and the roller center line RL when viewed from above, and is a direction orthogonal to the pulley center line PL when the drive pulley 2 is stopped.

A width direction of the sliding base 561 (the lower frame 561C, the middle frame 561B, and the upper frame 561A) is a direction orthogonal to the biasing direction of the spring 54 (the sliding direction of the first base shaft portion 51A and the second base shaft portion 52A) and the roller center line RL when viewed from above, and is a direction parallel to the pulley center line PL when the drive pulley 2 is stopped.

As illustrated in FIG. 4, a guide groove 561D (an internal space) that slidably accommodates the first base shaft portion 51A and the second base shaft portion 52A along the roller center line RL (along the biasing direction of the spring 54) is formed inside the sliding base 561 (the lower frame 561C, the middle frame 561B, and the upper frame 561A). The guide groove 561D is an internal space surrounded by an upper surface of the lower frame 561C, a lower surface of the upper frame 561A, and an inner surface of the middle frame 561B. Each surface of the sliding base 561 (the lower frame 561C, the middle frame 561B, and the upper frame 561A) facing the guide groove 561D is a smooth flat surface. These surfaces (particularly surfaces that can come into contact with an upper sliding plate 563A and a lower sliding plate 563D to be described later) may be formed of a synthetic resin, a solid lubricant, or the like having surface characteristics with a lower friction coefficient than that of a base material.

A length (groove width W1) in the width direction of the guide groove 561D corresponds to a length of an inner side in the width direction (inner width) of the middle frame 561B, is larger than a length of an inner side in the width direction (inner width W2) of the lower frame 561C and the upper frame 561A, and is equal to or slightly larger than a length in the width direction (width dimension) of each of the upper sliding plate 563A and the lower sliding plate 563D to be described later.

The length of the inner side in the width direction (inner width W2) of the lower frame 561C and the upper frame 561A is smaller than the length in the width direction (width dimension) of each of the upper sliding plate 563A and the lower sliding plate 563D to be described later.

A length (thickness) in the up-down direction of the middle frame 561B is uniform, and is equal to or slightly larger than a total length (total thickness) in the up-down direction of the upper sliding plate 563A, the lower sliding plate 563D, and a spacer 563C to be described later.

The end surface (surface facing the guide groove 561D) at the inner side of both end portions of the middle frame 561B in the longitudinal direction functions as a restriction surface (stopper) that restricts sliding of the first base shaft portion 51A and the second base shaft portion 52A along the roller center line RL. Accordingly, the spring 54 can be prevented from being overloaded during the operation of the automatic tensioner 5, and the toothed belt 4 can be prevented from becoming over-tension.

According to the above configurations, the sliding base 561 slidably supports the first base shaft portion 51A and the second base shaft portion 52A, between which the spring 54 is stretched, along the longitudinal direction (along the roller center line RL (along the biasing direction of the spring 54)) while restricting the first base shaft portion 51A and the second base shaft portion 52A so as not to be movable in the width direction and the up-down direction (a direction of the axis R) via the slid member 563 to be described later.

### (Swing Base 562)

The swing base 562 is a metal component made of an aluminum alloy casting (for example, ADC12) or the like, and is formed integrally (relatively unrotatably) with the sliding base 561 in a positional relationship in which a center of the sliding base 561 and a center of the swing base 562 coincide with each other when viewed from above such that the sliding base 561 itself (and further the swing holder 56 itself) is rotatably supported by the swing shaft 53 via the sliding member 55 (bearing) to be described later. That is, in the present embodiment, the center of rotation of the swing base 562 coincides with the center of the swing holder 56 when viewed from above. When viewed from above, the center of rotation of the swing base 562 may not necessarily coincide with the center of the swing holder 56.

The swing base 562 has a trunk portion 562A that extends in the up-down direction and has a square cross section along the horizontal direction (a shape having an outer width equal to an outer width of the sliding base 561 and an inner width slightly larger than a diameter of the flange portion 532 of the swing shaft 53 in order to avoid interference with the swing shaft 53), and a flange portion 562B that extends inward in the radial direction from a lower end of the trunk portion 562A. The flange portion 562B extends inward in the radial direction to a position where the flange portion 562B can come into contact with an outer circumferential surface of a cylindrical portion 552A extending in the up-down direction in a cylindrical sliding portion 552 of the sliding member 55 to be described later. A diameter of an inner end surface in the radial direction of the flange portion 562B (an inner diameter of the flange portion 562B) is equal to or slightly larger than a diameter (outer diameter) of the outer circumferential surface of the cylindrical portion 552A of the cylindrical sliding portion 552.

In both side portions (both side portions extending in a direction parallel to the width direction of the sliding base 561) opposite to each other in the longitudinal direction of the sliding base 561 above the trunk portion 562A of the swing base 562, in order to avoid interference with the slid member 563 (particularly a portion protruding lower than the sliding base 561) to be described later, an opening 562C (notch) cut out downward from the upper end surface (with an opening dimension larger than a length of the protruding portion in the up-down direction) and on both sides sandwiching the axis R in the direction parallel to the width direction of the sliding base 561 (with an opening dimension larger than the outer diameter of the protruding portion) is formed (see FIG. 4).

### (Slid Member 563)

As illustrated in FIG. 3, the slid member 563 is integrally fixed to the first base shaft portion 51A by being inserted into the first base shaft portion 51A (a main body of the male threaded portion) and being fixed to a fixing member 563E (a type of a cap nut) by a hinge from below, and can be slid with respect to the sliding base 561 by being pressed by the toothed belt 4 or by the biasing action of the spring 54. A slid member 564 is also mounted to the second base shaft portion 52A (since a configuration of the slid member 564 is the same as that of the slid member 563, description thereof is omitted).

As illustrated in FIG. 3, the slid member 563 fixed to the first base shaft portion 51A by the fixing member 563E includes the upper sliding plate 563A, the spacer 563C, and the lower sliding plate 563D in this order from above.

The upper sliding plate 563A and the lower sliding plate 563D are members (materials will be described later) having a function as a sliding material (low-friction material) having surface characteristics with a low friction coefficient, are formed in a flat plate shape having the same shape and size, have a substantially rectangular shape when viewed from above, and have a hole formed at the center when viewed from above in a manner of penetrating in the up-down direction for inserting the male threaded portion of the first base shaft portion 51A.

One of the spring end portion 541 is connected to the first base shaft portion 51A while being sandwiched between the upper sliding plate 563A and the lower sliding plate 563D (the other spring end portion of the spring 54 is similarly connected to the second base shaft portion 52A).

The spacer 563C is an annular flat washer (made of metal or synthetic resin) for preventing deformation of the spring end portion 541, and a length (thickness) in the up-down direction is equal to or slightly larger than the diameter of the spring wire of the spring 54. In the present embodiment, one spacer 563C is provided at an inner side in the radial direction of the spring end portion 541.

As a modification, another spacer 563C' (two spacers having different diameters as a whole) having the same thickness, an inner diameter larger than a winding outer diameter of the spring end portion 541, and an outer diameter smaller than the inner width of the middle frame 561B may be provided outside the spring end portion 541 in the radial direction.

### (Materials for Upper Sliding Plate 563A and Lower Sliding Plate 563D)

The upper sliding plate 563A and the lower sliding plate 563D of the present embodiment are made of synthetic resin and are formed by injection molding in order to ensure a function as a sliding material (low-friction material) having surface characteristics with a low friction coefficient. As the synthetic resin which is a main component of the sliding material, for example, thermoplastic resin such as polyamide, polyacetal, polytetrafluoroethylene, polyphenylene sulfide, or ultra-high molecular weight polyethylene, or thermosetting resin such as phenol is used. A solid lubricant may or may not be blended as the sliding material (low-friction material). A fiber for reinforcement may or may not be blended as the sliding material (low-friction material).

In the upper sliding plate 563A and the lower sliding plate 563D as the sliding materials (low-friction materials), a base material may be formed of a metal material such as steel, brass, or bronze, and the sliding surfaces (the upper surface and both end surfaces in the width direction of the upper sliding plate 563A, and the lower surface and both end surfaces in the width direction of the lower sliding plate 563D) may be formed of a synthetic resin material having surface characteristics with a lower friction coefficient than those of the base material. The synthetic resin material preferably has self-lubricity. Specifically, regarding the synthetic resin material forming the sliding surface, thermoplastic resin such as polyamide, polyacetal, polytetrafluoroethylene, polyphenylene sulfide, or ultra-high molecular weight polyethylene, or thermosetting resin such as phenol is preferably used as the synthetic resin which is a main component. A solid lubricant such as molybdenum disulfide, tungsten disulfide, graphite, or boron nitride may or may not be blended into the synthetic resin which is the main component. A fiber for reinforcement may or may not be blended in the synthetic resin which is the main component. When the base material is formed of a metal material, the above solid lubricant may be applied to the sliding surface, or the sliding surface may be subjected to a plating treatment having good lubricity, as long as the material has surface characteristics with a friction coefficient lower than that of the base material.

The upper sliding plate 563A and the lower sliding plate 563D of the present embodiment are formed by injection molding hard thermoplastic resin (for example, polyacetal resin) having a rockwell R scale (in accordance with JIS K7202-2: 2001) of 80 to 130 from a viewpoint of low-friction sliding property, wear resistance, and the like.

### (Sliding Member 55 (Bearing))

The sliding member 55 includes the cylindrical sliding portion 552 and a plate-shaped sliding portion 551, which are formed separately from each other.

As illustrated in FIG. 4, the cylindrical sliding portion 552 includes the cylindrical portion 552A extending in the up-down direction and a plate-shaped portion 552B extending outward in the radial direction from a lower end of the cylindrical portion 552A.

The plate-shaped sliding portion 551 is formed in an annular plate shape. A thickness of the plate-shaped sliding portion 551 is uniform.

The sliding member 55 is fitted around the trunk portion 531 of the swing shaft 53. Specifically, the plate-shaped sliding portion 551, the flange portion 562B of the swing base 562, and the cylindrical sliding portion 552 are fitted around the trunk portion 531 of the swing shaft 53 in this order, and the plate-shaped sliding portion 551 and the cylindrical sliding portion 552 are fixed in a manner of being sandwiched in the up-down direction between the flange portion 532 of the swing shaft 53 and the casing of the second arm 11.

The sliding member 55 functions as a sliding bearing that slides with respect to the swing base 562 by the cylindrical portion 552A of the cylindrical sliding portion 552 being in surface contact with an inner circumferential surface of the flange portion 562B of the swing base 562, the plate-shaped portion 552B of the cylindrical sliding portion 552 being in surface contact with the lower end surface of the flange portion 562B of the swing base 562, and the lower end surface of the plate-shaped sliding portion 551 being in surface contact with the upper end surface of the flange portion 562B of the swing base 562. Accordingly, the swing base 562 (swing holder 56) is rotatably supported by the swing shaft 53 via the sliding member 55 (bearing).

Similar to the upper sliding plate 563A and the lower sliding plate 563D, the sliding member 55 (bearing) of the present embodiment is formed by injection molding hard thermoplastic resin (for example, polyacetal resin) having a rockwell R scale (in accordance with JIS K7202-2: 2001) of 80 to 130 from a viewpoint of low-friction sliding property, wear resistance, and the like.

According to the above configuration, the swing holder 56 itself that slidably accommodates the first base shaft portion 51A and the second base shaft portion 52A, between which the spring 54 is stretched, along the roller center line RL (along the biasing direction of the spring 54) is rotatable about the central axis R of the swing shaft 53, so that it is possible to specifically implement an aspect in which the first tension roller 51 and the second tension roller 52 swing in a plane about the central axis R of the swing shaft 53 in addition to the biasing action of the spring 54.

### (Operation of Automatic Tensioner 5: Tight Side of Toothed Belt 4)

### (Operation)

i. In a state in which the drive pulley 2 is stopped, the two tension rollers (the first tension roller 51 and the second tension roller 52) and the outer circumferential surface of the toothed belt 4 are in contact with each other and balanced with each other in an aspect in which the roller center line RL and the pulley center line PL are orthogonal to each other when viewed in a direction parallel to the drive shaft 21 (hereinafter, viewed from above) (see FIG. 2).
ii. At the time of forward and reverse switching (at the time of starting/stopping forward and reverse rotation) (when the drive pulley 2 rotates in an arrow Z direction in FIG. 5)

First, on the tight side of the toothed belt 4, when the tension of the toothed belt 4 increases, and the first tension roller 51, which is one of the tension rollers positioned on the tight side of the toothed belt 4, is pressed by the toothed belt 4 by the tension of the toothed belt 4 to be displaced in a tight direction of the toothed belt 4, in the present configuration, since the two tension rollers (the first tension roller 51 and the second tension roller 52) respectively provided on the first base shaft portion 51A and the second base shaft portion 52A, between which the spring 54 is stretched, are configured to swing in a plane about the swing shaft 53 (provided at the center of the swing holder 56 when viewed from above in the present embodiment) (the central axis R), along with the increase in the tension of the toothed belt 4, the first tension roller 51 starts to swing in an arrow (1) direction about the swing shaft 53 via the swing holder 56 rotating in an arrow X direction about the swing shaft 53 while being pressed by the toothed belt 4 and being displaced in the tight direction of the toothed belt 4 (and in a direction toward the drive pulley 2), and swings about the swing shaft 53 via the swing holder 56 rotating about the swing shaft 53 in the arrow X direction while resisting a biasing force of the spring 54, and is thereby quickly displaced in the arrow (1) direction to a balanced position, that is, a position (that is, a position where a distance between the swing central point (central axis R of the swing shaft 53) and the toothed belt 4 is the shortest) where the extending direction of the roller center line RL (biasing direction of the spring 54) is perpendicular to the extending direction of the (substantially linear) toothed belt 4 on the tight side reaching a tension state when viewed from above (see FIG. 5).

### (Effect)

That is, in the present configuration, since the swing central point (the central axis R of the swing shaft 53) is the intersection point of the roller center line RL and the pulley center line PL (a central point of the swing holder 56 in the present embodiment) when viewed from above, on the tight side of the toothed belt 4, when the tension of the toothed belt 4 increases and the first tension roller 51 positioned on the tight side of the toothed belt 4 is pressed by the toothed belt 4 by the tension of the toothed belt 4 to be displaced in the tight direction of the toothed belt 4, the first tension roller 51 swings about the swing shaft 53 via the swing holder 56 rotating about the swing shaft 53 in the arrow X direction while resisting the biasing force of the spring 54, and is thereby capable of being quickly displaced in the arrow (1) direction to the balanced position where the distance between the central point of the swinging and the toothed belt 4 is the shortest.

Therefore, compared with a configuration in which the two tension rollers (the first tension roller 51 and the second tension roller 52) cannot swing about the swing shaft 53 provided at the intersection point of the roller center line RL and the pulley center line PL when viewed from above (a configuration in which only the biasing force of the spring acts on the two tension rollers), and the two tension rollers can be displaced only in the direction orthogonal to the pulley center line PL when viewed from above (for example, the configuration of Patent Literature 1 in FIG. 1), on the tight side of the toothed belt 4, since the first tension roller 51 can be quickly displaced in the arrow (1) direction to the balanced position by swinging about the swing shaft 53 via the swing holder 56 rotating about the swing shaft 53 in the arrow X direction while preventing attenuation (displacement in a direction for resisting the biasing force of the spring 54) by the spring 54, responsiveness (operation speed) of the first tension roller 51 on the tight side of the toothed belt 4 improves along with the forward and reverse rotation, and the toothed belt 4 can be prevented from becoming over-tension (tension variations can be kept low).

### (Operation of Automatic Tensioner 5: Slack Side of Toothed Belt 4)

### (Operation and Effect)

iii. Next, on the slack side of the toothed belt 4, the tension of the toothed belt 4 decreases, and slack of the toothed belt 4 occurs, but in conjunction with the first tension roller 51 on the tight side swinging about the swing shaft 53 (the central axis R) via the swing holder 56 rotating about the swing shaft 53 in the arrow X direction while resisting the biasing force of the spring 54 in the above operation (ii) on the tight side of the toothed belt 4, on the slack side of the toothed belt 4, the second tension roller 52 swings about the swing shaft 53 via the swing holder 56 rotating about the swing shaft 53 in the arrow X direction while being biased by the spring 54 in a direction (the biasing direction of the spring 54) where the slack of the toothed belt 4 is naturally eliminated in a region opposite to the first tension roller 51 across the same swing central point (the intersection point of the roller center line RL and the pulley center line PL) when viewed from above (see FIG. 5), and is thereby quickly displaced in an arrow (2) direction.

Therefore, on the slack side of the toothed belt 4, the responsiveness (operation speed) of the second tension roller 52 is also improved, and the second tension roller 52 can be maintained in a state of being in contact with the outer circumferential surface of the toothed belt 4, so that the tension of the toothed belt 4 can be automatically and appropriately maintained without generating the slack of the toothed belt 4.

### (When Drive Pulley 2 Rotates in Direction Opposite to Arrow Z Direction in FIG. 5)

Next, when the drive pulley 2 is driven to rotate in a direction opposite to the arrow Z direction in FIG. 5, the positions of the tight side and the slack side of the toothed belt 4 become opposite to those in the above case (where the drive pulley 2 is driven to rotate in the arrow Z direction in FIG. 5). First, on the tight side of the toothed belt 4, when the second tension roller 52 is pressed by the toothed belt 4 to be displaced in the tight direction of the toothed belt 4, the second tension roller 52 swings about the swing shaft 53 via the swing holder 56 rotating about the swing shaft 53 in the direction opposite to the arrow X direction while resisting the biasing force of the spring 54, and is thereby quickly displaced in a direction opposite to the arrow (2) direction in FIG. 5 from the position illustrated in FIG. 5 to the balanced position, next, in conjunction with this, the first tension roller 51 swings about the swing shaft 53 via the swing holder 56 rotating about the swing shaft 53 in the direction opposite to the arrow X direction while being biased by the spring 54 in the direction (spring biasing direction) where the slack of the toothed belt 4 is naturally eliminated, and is thereby quickly displaced from the position illustrated in FIG. 5 in the direction opposite to the arrow (1) direction in FIG. 5.

Accordingly, on the tight side of the toothed belt 4, the responsiveness (operation speed) of the second tension roller 52 is improved, and the toothed belt 4 can be prevented from becoming over-tension (tension variation can be kept to be low), and on the slack side of the toothed belt 4, the responsiveness (operation speed) of the first tension roller 51 is improved, and the first tension roller 51 can be maintained in a state of being in contact with the outer circumferential surface of the toothed belt 4, so that the tension of the toothed belt 4 can be automatically and appropriately maintained without generating the slack of the toothed belt 4.

As described above, according to the present configuration, in the belt power-transmission system for robot arm drive 1, regardless of whether the drive pulley 2 rotates in the forward or reverse direction, the responsiveness to the drive at the time of forward and reverse switching (at the time of starting/stopping forward and reverse rotation) can be ensured at a high level (that is, the rotation angle difference between the drive pulley 2 and the driven pulley 3 at the time of forward and reverse switching can be sufficiently reduced), and even if the speed of the operation involving the forward and reverse rotation increases, it is possible to ensure the synchronous power-transmission [to maintain the tension of the toothed belt 4 automatically and appropriately (to the extent that the toothed belt 4 does not slack) (including adjustment of a tension drop occurring at an initial stage of running)].

The two tension rollers (the first tension roller 51 and the second tension roller 52) are provided on the drive pulley 2 side, or on the pulley side where the pulley has the smaller diameter out of the drive pulley 2 and the driven pulley 3.

In the belt power-transmission system for robot arm drive 1, in order to ensure a rotational torque of the driven pulley 3 at a predetermined level, the diameter of the drive pulley 2 is generally smaller than the diameter of the driven pulley 3 (the belt power-transmission system for robot arm drive 1 generally functions as a so-called speed reduction system), but there are cases where the diameters of the drive pulley 2 and the driven pulley 3 are the same. For example, in the belt power-transmission system 1 in which an interval between the drive pulley 2 and the driven pulley 3 is narrow and a speed reduction ratio (ratio of the pulley diameters) is large, the contact angle of the toothed belt 4 is small in the drive pulley 2 with a small diameter, and if the slack of the toothed belt 4 is large, there is a concern that the tooth jump of the toothed belt 4 is likely to occur, but according to the present configuration, in the drive pulley 2 (including the case where the drive pulley 2 and the driven pulley 3 have the same diameter) or in the pulley with a smaller diameter (regardless of the drive or driven side), it is possible to prevent a decrease in the contact angle of the toothed belt 4, and thus the tooth jump of the toothed belt 4 can be difficult to occur.

When the diameter of the drive pulley 2 of the belt power-transmission system 1 is smaller than the diameter of the driven pulley 3 (that is, when the belt power-transmission system 1 is a speed reduction system), the degree of displacement of the two tension rollers when the two tension rollers swing about the swing shaft 53 at the time of forward and reverse switching is larger than that when the diameter of the drive pulley 2 is the same as the diameter of the driven pulley 3.

Therefore, according to the present configuration, compared with a configuration in which the two tension rollers (the first tension roller 51 and the second tension roller 52) cannot swing about the swing shaft 53 (a configuration in which only the biasing force of the spring acts on the two tension rollers) and the two tension rollers can be displaced only in the direction orthogonal to the pulley center line when viewed in the direction parallel to the drive shaft, it is possible to further increase an effect that the first tension roller 51 can be more quickly displaced by swinging about the swing shaft 53 while preventing attenuation by the spring 54 (displacement in the direction for resisting the biasing force of the spring 54) on the tight side of the toothed belt 4. Further, in the belt power-transmission system for robot arm drive 1, the responsiveness to the drive at the time of forward and reverse switching (at the time of starting/stopping forward and reverse rotation) can be ensured at a higher level.

### (Another Embodiment)

In the above embodiment, the belt power-transmission system according to the present invention is described as a belt power-transmission system for robot arm drive that drives a robot arm, but the present invention is not limited thereto. For example, the belt power-transmission system according to the present invention can be applied to a belt power-transmission system of an injection molding machine (a belt power-transmission system portion electrically driven by motors independent of each other in respective operation portions such as injection, metering, and mold opening and closing portions), a general industrial machine or device, or the like.

### (Automatic Tensioner 5 of Second Embodiment)

Hereinafter, a second embodiment of the present invention will be described. As illustrated in FIG. 7 to FIG. 9, the automatic tensioner 5 of the second embodiment includes: the swing shaft 53 fixed to the casing of the second arm 11; a first swing arm 58 in which the first base shaft portion 51A rotatably supporting the first tension roller 51 is provided at a tip end portion 581 (corresponds to one end portion of the first swing arm 58) and a base end portion 582(corresponds to the other end portion of the first swing arm 58) is rotatably supported with respect to the swing shaft 53; a second swing arm 57 in which the second base shaft portion 52A rotatably supporting the second tension roller 52 is provided at a tip end portion 571 (corresponds to one end portion of the second swing arm 57) and a base end portion 572 (corresponds to the other end portion of the second swing arm 57) is rotatably supported with respect to the swing shaft 53; and the spring 54 that biases the first base shaft portion 51Aand the second base shaft portion 52A in a direction toward each other along the roller center line RL connecting the rotation center 51C of the first tension roller 51 and the rotation center 52C of the second tension roller 52.

In the present embodiment, in the automatic tensioner 5, the two tension rollers (the first tension roller 51 and the second tension roller 52) are provided not on a driven pulley 3 side but on a drive pulley 2 side. In the automatic tensioner 5, the two tension rollers (the first tension roller 51 and the second tension roller 52) may be provided on a pulley side where the pulley has a smaller diameter out of the drive pulley 2 and the driven pulley 3. Here, "the two tension rollers are provided on the drive pulley 2 side" means that an intersection point of the roller center line RL and the pulley center line PL is located on the drive pulley 2 side with respect to a center of the pulley center line PL.

### (First Tension Roller 51 and Second Tension Roller 52)

The first tension roller 51 is a cylindrical roller member rotatably supported about a central axis R2 by the first base shaft portion 51A via a rolling bearing (not illustrated). The second tension roller 52 is also a cylindrical roller member rotatably supported about a central axis R3 by the second base shaft portion 52A via a rolling bearing (not illustrated).

As illustrated in FIG. 7, the first tension roller 51 and the second tension roller 52 are provided on the drive pulley 2 side and are provided rotatably about the first base shaft portion 51A and the second base shaft portion 52A, respectively, at positions on both sides sandwiching the pulley center line PL connecting the rotation center 22 of the drive pulley 2 and the rotation center 32 of the driven pulley 3, and the first tension roller 51 and the second tension roller 52 can come into contact with the outer circumferential surface of the toothed belt 4.

### (First Base Shaft Portion 51A and Second Base Shaft Portion 52A)

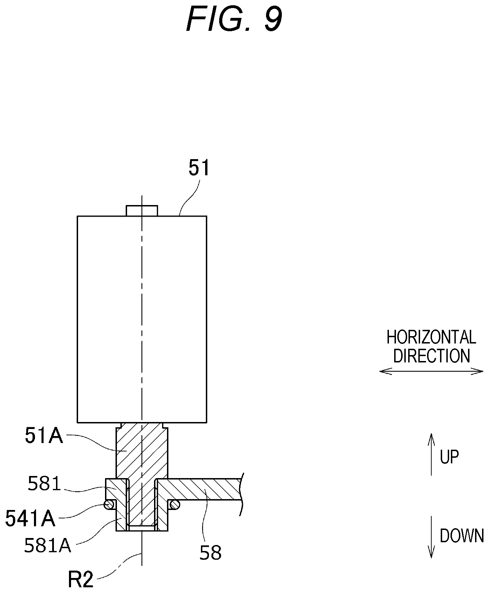

As illustrated in FIG. 8 and FIG. 9, the first base shaft portion 51A is a base end portion that supports the first tension roller 51 via the rolling bearing (not illustrated) so as to be rotatable about the central axis R2.

In the first base shaft portion 51A, a male threaded portion to be inserted into a hole (a female threaded portion) provided in the tip end portion 581 of the first swing arm 58 to be described later extends downward.

Similarly, as illustrated in FIG. 8, the second base shaft portion 52A is a base end portion that rotatably supports the second tension roller 52 about the central axis R3 via the rolling bearing (not illustrated).

In the second base shaft portion 52A, a male threaded portion to be inserted into a hole (a female threaded portion) provided in the tip end portion 571 of the second swing arm 57 to be described later extends downward.

The spring 54 to be described later is stretched between the first base shaft portion 51A and the second base shaft portion 52A.

### (Swing Shaft 53)

As illustrated in FIG. 8, the swing shaft 53 is a metal component including the cylindrical trunk portion 531 extending in the up-down direction, the flange portion 532 extending outward in the radial direction from the upper end of the trunk portion 531, and the fastening portion 533 extending below from the center portion of the end surface at the lower portion (lower end surface) of the trunk portion 531, and obtained by integrally forming these portions.

As illustrated in FIG. 7, the swing shaft 53 is fixed to the casing (female threaded portion) of the second arm 11 of the horizontal articulated robot 10 via the fastening portion 533 (male threaded portion) such that the central axis R (swing central point) of the swing shaft 53 passes through a point on the pulley center line PL (which may be a point on the extension line of the pulley center line PL) and separated toward the drive pulley 2 side from the intersection point of the pulley center line PL and the roller center line RL connecting the rotation center 51C of the first tension roller 51 and the rotation center 52C of the second tension roller 52, and extends in the direction parallel to the drive shaft 21. The outer circumferential surface of the trunk portion 531 and the lower end surface of the flange portion 532 of the swing shaft 53 are in surface contact with the sliding member 55 (bearing), and the first swing arm 58 and the second swing arm 57 are rotatably supported via the sliding member 55 (bearing).

### (Spring 54)

The spring 54 is a tension spring in the present embodiment.

The tension spring is stretched between the first base shaft portion 51A and the second base shaft portion 52A in a state in which the tension spring is stretched in a direction where the tension spring becomes longer than a natural length thereof (a state in which a self-elastic recovery force acts in a contraction direction), and biases the first base shaft portion 51A and the second base shaft portion 52A in a direction toward each other along the roller center line RL. That is, the spring 54 biases the first tension roller 51, which is rotatably provided on the first base shaft portion 51A, and the second tension roller 52, which is rotatably provided on the second base shaft portion 52A, in a direction toward each other along the roller center line RL.

As illustrated in FIG. 7, the tension spring is employed when the first tension roller 51 and the second tension roller 52 are used in a manner of being in contact with the outer circumferential surface of the toothed belt 4.

A compression spring may be employed as the spring 54. The compression spring is mounted between the first base shaft portion 51A and the second base shaft portion 52A in a state in which the compression spring is compressed in a direction where the compression spring becomes shorter than a natural length thereof (a state in which a self-elastic recovery force acts in an extending direction), and is used when the first base shaft portion 51A and the second base shaft portion 52A are biased in a direction away from each other along the roller center line RL. Specifically, the compression spring is employed when the first tension roller 51 and the second tension roller 52 are disposed at an inner circumferential side of the toothed belt 4, and the first tension roller 51 and the second tension roller 52 are in contact with the inner circumferential surface of the toothed belt 4.

As in the present embodiment, when a tension spring is used as the spring 54, the two tension rollers (the first tension roller 51 and the second tension roller 52) sandwich both sides (the tight side and the slack side) of the toothed belt 4 by a biasing action of one spring 54 (tension spring). Therefore, as compared with a configuration in which the spring 54 is a compression spring and the two tension rollers (the first tension roller 51 and the second tension roller 52) are provided to come into contact with the inner circumferential surface of the toothed belt 4 (a case of an aspect in which both sides of the toothed belt 4 are pressed and widened by the two tension rollers by a biasing action of one compression spring), a contact angle of the toothed belt 4 (a central angle with respect to an arc where the belt and the pulley come into contact with each other) becomes large, and thus it is possible to prevent the tooth jump of the toothed belt 4 from occurring.

The spring 54 is preferably a coil spring so that predetermined spring characteristics can be repeatedly obtained for each belt power-transmission system 1, and a coil spring is also used in the present embodiment.

A spring wire is preferably a spring oil-tempered wire having a circular cross section or the like in accordance with JIS G3560: 1994, and the present embodiment employs a spring oil-tempered wire having a circular cross section according to the above standard.

A diameter of the spring wire and a winding diameter and a winding length (natural length) of the spring are designed and determined such that predetermined spring characteristics are repeatedly obtained for each belt power-transmission system 1 (particularly, for each level of tension of the belt).

In the present embodiment, in order to facilitate stretching of the spring 54 between the first base shaft portion 51A and the second base shaft portion 52A, both end portions (hereinafter, referred to as the "spring end portions 541A and 541B") of the spring 54 corresponding to substantially one turn parts of the ends of the spring 54 are bent by about 90° in the same direction.

### (First Swing Arm 58 and Second Swing Arm 57)

The first swing arm 58 and the second swing arm 57 are metal components independent of each other and made of an aluminum alloy casting (for example, ADC12) or the like.

As illustrated in FIG. 8, the base end portion 582 of the first swing arm 58 is rotatably supported by the swing shaft 53 (via the sliding member 55 (bearing) to be described later).

Similarly, as illustrated in FIG. 8, the base end portion 572 of the second swing arm 57 is also rotatably supported by the swing shaft 53 (via the sliding member 55 (bearing) to be described later).

As illustrated in FIG. 7, the first swing arm 58 and the second swing arm 57 are formed to be a substantially C-shape as a whole when viewed from above in a state of being provided in the belt power-transmission system 1 as the automatic tensioner 5.

### (Tip End Portion 581 and Tip End Portion 571)

As illustrated in FIG. 9, a convex portion 581A that protrudes downward (below the lower end surface of the arm portion between the tip end portion 581 and the base end portion 582) in a cylindrical shape about the axis R2 (the central axis of the first tension roller 51) is formed in the tip end portion 581 of the first swing arm 58. A female threaded portion is formed in a hole which penetrates the tip end portion 581 in the up-down direction about the axis R2, including the convex portion 581A. The spring end portion 541A of the spring 54 is inserted into the convex portion 581A from below, and is engaged with an outer circumferential portion of an upper end (base) of the convex portion 581A.

Accordingly, at the tip end portion 581 of the first swing arm 58, the first base shaft portion 51A (a main body of the male threaded portion) is fixed by a hinge from above, so that the spring end portion 541A is engaged with the first base shaft portion 51A via the convex portion 581A.

As illustrated in FIG. 8, a convex portion 571A that protrudes upward in a cylindrical shape about the axis R3 (the central axis of the second tension roller 52) (above the upper end surface of the arm portion between the tip end portion 571 and the base end portion 572) is formed in the tip end portion 571 of the second swing arm 57. A female threaded portion is formed in a hole which penetrates the tip end portion 571 in the up-down direction about the axis R3, including the convex portion 571A. The spring end portion 541B of the spring 54 is inserted into the convex portion 571A from above, and is engaged with an outer circumferential portion of a lower end (base) of the convex portion 571A.

Accordingly, at the tip end portion 571 of the second swing arm 57, the second base shaft portion 52A (a main body of the male threaded portion) is fixed by a hinge from above, so that the spring end portion 541B is engaged with the second base shaft portion 52A via the convex portion 571A.

According to the above configuration, the first base shaft portion 51A rotatably supporting the first tension roller 51 is fixed (by a hinge) to the tip end portion 581 of the first swing arm 58 so as not to be movable.

Similarly, the second base shaft portion 52A rotatably supporting the second tension roller 52 is fixed (by a hinge) to the tip end portion 571 of the second swing arm 57 so as not to be movable.

The spring end portion 541A is inserted through the first base shaft portion 51A, and the spring end portion 541B is inserted through the second base shaft portion 52A, so that the spring 54 is stretched between the first base shaft portion 51A and the second base shaft portion 52A in a state in which engagement positions of the spring end portions 541A and 541B are on the same plane in a side view (do not shift in the up-down direction) and the spring end portions 541A and 541B cannot fall off (see FIG. 8).

### (Base End Portion 582 and Base End Portion 572)

The base end portion 582 of the first swing arm 58 has a flange shape extending upward, and is formed in a cylindrical shape when viewed from above. Specifically, as illustrated in FIG. 8, an upper end surface of the base end portion 582 extends upward to a position where the upper end surface of the base end portion 582 can come into contact with a lower end surface of a plate-shaped portion 554B extending outward in the radial direction from an upper end of a cylindrical portion 554A extending in the up-down direction in an upper cylindrical sliding portion 554 of the sliding member 55 to be described later, and a lower end surface of the base end portion 582 comes into contact with an upper end surface of a plate-shaped sliding portion 555 of the sliding member 55 to be described later.

The base end portion 582 extends inward in the radial direction to a position where the base end portion 582 can come into contact with an outer circumferential surface of the cylindrical portion 554A extending in the up-down direction of the upper cylindrical sliding portion 554. A diameter (inner diameter) of an inner end surface in the radial direction of the base end portion 582 is equal to or slightly larger than a diameter (outer diameter) of the outer circumferential surface of the cylindrical portion 554A of the upper cylindrical sliding portion 554 (see FIG. 8).

The base end portion 572 of the second swing arm 57 has a flange shape extending downward, and is formed in a cylindrical shape when viewed from above. Specifically, as illustrated in FIG. 8, a lower end surface of the base end portion 572 extends downward to a position where the lower end surface of the base end portion 572 can come into contact with an upper end surface of a plate-shaped portion 553B extending outward in the radial direction from a lower end of a cylindrical portion 553A extending in the up-down direction in a lower cylindrical sliding portion 553 of the sliding member 55 to be described later, and an upper end surface of the base end portion 572 comes into contact with a lower end surface of the plate-shaped sliding portion 555 of the sliding member 55 to be described later.

The base end portion 572 extends inward in the radial direction to a position where the base end portion 572 can come into contact with an outer circumferential surface of the cylindrical portion 553A extending in the up-down direction of the lower cylindrical sliding portion 553. A diameter (inner diameter) of an inner end surface in the radial direction of the base end portion 572 is equal to or slightly larger than a diameter (outer diameter) of the outer circumferential surface of the cylindrical portion 553A of the lower cylindrical sliding portion 553 (see FIG. 8).

According to the above configuration, the base end portion 582 of the first swing arm 58 and the base end portion 572 of the second swing arm 57 are independent of each other in the up-down direction and are rotatably supported by the swing shaft 53 via the sliding member 55 (bearing) to be described later.

### (Sliding Member 55 (Bearing))

As illustrated in FIG. 8, the sliding member 55 includes the upper cylindrical sliding portion 554, the plate-shaped sliding portion 555, and the lower cylindrical sliding portion 553, which are formed separately. The upper cylindrical sliding portion 554 and the lower cylindrical sliding portion 553 have the same configuration (shape and dimension).

The upper cylindrical sliding portion 554 includes the cylindrical portion 554A extending in the up-down direction and the plate-shaped portion 554B extending outward in the radial direction from the upper end of the cylindrical portion 554A.

The plate-shaped sliding portion 555 has a plate-shaped portion 555A formed in an annular plate shape, and a cylindrical portion 555B extending in the up-down direction on the inner side in the radial direction of the plate-shaped portion 555A.

The lower cylindrical sliding portion 553 includes the cylindrical portion 553A extending in the up-down direction and the plate-shaped portion 553B extending outward in the radial direction from a lower end of the cylindrical portion 553A.

The sliding member 55 is fitted around the trunk portion 531 of the swing shaft 53. Specifically, the upper cylindrical sliding portion 554, the base end portion 582, the plate-shaped sliding portion 555, the base end portion 572, and the lower cylindrical sliding portion 553 are fitted around the trunk portion 531 of the swing shaft 53 in this order, and the upper cylindrical sliding portion 554, the plate-shaped sliding portion 555, and the lower cylindrical sliding portion 553 are fixed in a state of being sandwiched in the up-down direction between the flange portion 532 of the swing shaft 53 and the casing of the second arm 11.

The sliding member 55 functions as a sliding bearing that slides with respect to the first swing arm 58 by the cylindrical portion 554A of the upper cylindrical sliding portion 554 and the cylindrical portion 555B of the plate-shaped sliding portion 555 being in surface contact with an inner circumferential surface of the base end portion 582, the plate-shaped portion 554B of the upper cylindrical sliding portion 554 being in surface contact with the upper end surface of the base end portion 582, and the upper end surface of the plate-shaped portion 555A of the plate-shaped sliding portion 555 being in surface contact with the lower end surface of the base end portion 582 with respect to the first swing arm 58.

Similarly, the sliding member 55 functions as a sliding bearing that slides with respect to the second swing arm 57 by the cylindrical portion 553A of the lower cylindrical sliding portion 553 and the cylindrical portion 555B of the plate-shaped sliding portion 555 being in surface contact with an inner circumferential surface of the base end portion 572, the plate-shaped portion 553B of the lower cylindrical sliding portion 553 being in surface contact with the lower end surface of the base end portion 572, and the lower end surface of the plate-shaped portion 555A of the plate-shaped sliding portion 555 being in surface contact with the upper end surface of the base end portion 572 with respect to the second swing arm 57.

According to the above configuration, the first swing arm 58 and the second swing arm 57 are independent of each other and rotatably supported by the swing shaft 53 via the sliding member 55 (bearing).

The sliding member 55 (bearing) of the present embodiment is formed by injection molding hard thermoplastic resin (for example, polyacetal resin) having a rockwell R scale (in accordance with JIS K7202-2: 2001) of 80 to 130 from a viewpoint of low-friction sliding property, wear resistance, and the like.

### (Operation of Automatic Tensioner 5: Tight Side of Toothed Belt 4)

### (Operation)

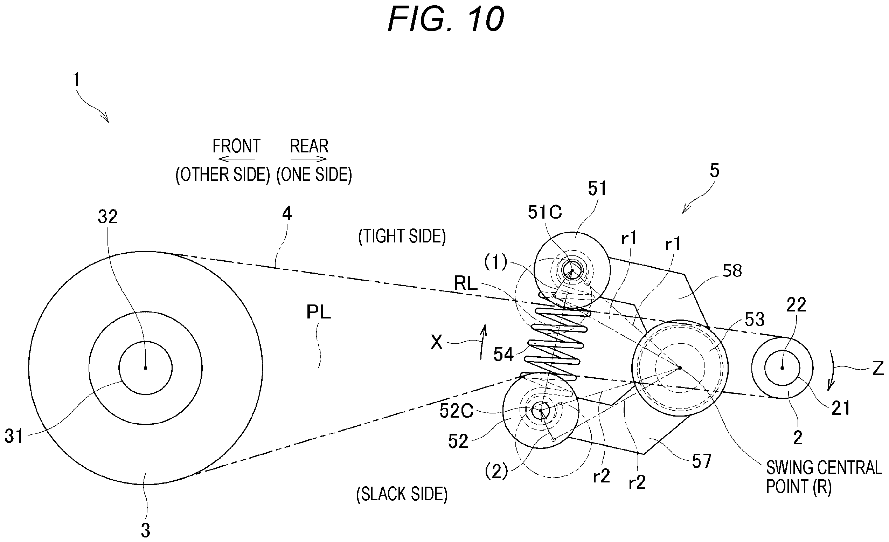

In the belt power-transmission system for robot arm drive 1,
i. in a state in which the drive pulley 2 is stopped, the two tension rollers (the first tension roller 51 and the second tension roller 52) and the outer circumferential surface of the toothed belt 4 are in contact with each other and balanced with each other in an aspect in which the roller center line RL and the pulley center line PL are orthogonal to each other when viewed in the direction parallel to the drive shaft 21 (hereinafter, viewed from above) (see FIG. 7).
ii. At the time of the forward and reverse switching (at the time of starting/stopping forward and reverse rotation) (when the drive pulley 2 rotates in an arrow Z direction in FIG. 10)

First, on the tight side of the toothed belt 4, when the tension of the toothed belt 4 increases, and the first tension roller 51, which is one of the tension rollers positioned on the tight side of the toothed belt 4, is pressed by the toothed belt 4 by the tension of the toothed belt 4 to be displaced in the tight direction of the toothed belt 4, in the present configuration, the two tension rollers (the first tension roller 51 and the second tension roller 52), in which the first swing arm 58 and the second swing arm 57 are rotatable about the swing shaft 53 and the spring 54 is connected (biased) between the first base shaft portion 51A and the second base shaft portion 52A, are configured to swing about the swing shaft 53 (central axis R) in a plane, and thus along with the increase in the tension of the toothed belt 4, the first tension roller 51 starts to rotate in the arrow (1) direction about the swing shaft 53 on a trajectory having a swing radius r1 between the rotation center 51C of the first tension roller 51 and the swing central point (central axis R) of the swing shaft 53 when viewed from above via the first swing arm 58 rotating about the swing shaft 53 in the arrow X direction while being pressed by the toothed belt 4 to be displaced in the tight direction of the toothed belt 4 (and toward the drive pulley 2 side), and rotates in the arrow (1) direction about the swing shaft 53 via the first swing arm 58 rotating about the swing shaft 53 in the arrow X direction while resisting the biasing force of the spring 54, and is thereby quickly displaced to the balanced position, that is, a belt position where a tension state is reached on the tight side of the toothed belt 4 (see FIG. 10).

### (Effect)

In the present configuration, since the swing central point (the central axis R) is a point on the pulley center line PL and separated toward the drive pulley 2 side from the intersection point of the roller center line RL and the pulley center line PL when viewed from above, on the tight side of the toothed belt 4, when the tension of the toothed belt 4 increases, and the first tension roller 51 positioned on the tight side of the toothed belt 4 is pressed by the toothed belt 4 by the tension of the toothed belt 4 to be displaced in the tight direction of the toothed belt 4, the two tension rollers (the first tension roller 51 and the second tension roller 52), in which the first swing arm 58 and the second swing arm 57 are rotatable about the swing shaft 53 and the spring 54 is connected (biased) between the first base shaft portion 51A and the second base shaft portion 52A, are configured to swing about the swing shaft 53, and thus the first tension roller 51 swings about the swing shaft 53 in the tight direction (the arrow (1) or arrow (2) direction in FIG. 10) of the toothed belt 4 on trajectories having the swing radius r1 of the first tension roller 51 and a swing radius r2 (a distance between the rotation center 52C of the second tension roller 52 and the swing central point (the central axis R) of the swing shaft 53) of the second tension roller 52 as the swing radii respectively for the two tension rollers (the first tension roller 51 and the second tension roller 52), in which the spring 54 is connected (biased) between the first base shaft portion 51A and the second base shaft portion 52A, while resisting the biasing force of the spring 54, so that the first tension roller 51 can be quickly displaced to the balanced position.

Therefore, compared with the configuration in which the two tension rollers (the first tension roller 51 and the second tension roller 52) cannot swing about the swing shaft 53 (the configuration in which only the biasing force of the spring acts on the two tension rollers), and the two tension rollers can be displaced only in the direction orthogonal to the pulley center line PL when viewed from above (for example, the configuration of Patent Literature 1 in FIG. 1), on the tight side of the toothed belt 4, the first tension roller 51 swings about the swing shaft 53 via the first swing arm 58 rotating about the swing shaft 53 in the arrow X direction while preventing attenuation (displacement in the direction for resisting the biasing force of the spring 54) by the spring 54, and is thereby quickly displaced to the balanced position, and thus the responsiveness (operation speed) of the first tension roller 51 on the tight side of the toothed belt 4 improves along with the forward and reverse rotation, and it is possible to prevent over-tension in the toothed belt 4 (tension variations can be kept low).

### (Operation of Automatic Tensioner 5: Slack Side of Toothed Belt 4)

### (Operation and Effect)

iii) Next, on the slack side of the toothed belt 4, the tension of the toothed belt 4 decreases, and the slack of the toothed belt 4 occurs, but in conjunction with the first tension roller 51 on the tight side swinging in the arrow (1) direction about the swing shaft 53 on the trajectories having the swing radius r1 of the first tension roller 51 and the swing radius r2 of the second tension roller 52 as swing radii respectively for the two tension rollers (the first tension roller 51 and the second tension roller 52), in which the spring 54 is connected (biased) between the first base shaft portion 51A and the second base shaft portion 52A, while resisting the biasing force of the spring 54 in the above operation (ii) on the tight side of the toothed belt 4, on the slack side of the toothed belt 4, the second tension roller 52 swings about the swing shaft 53 via the second swing arm 57 rotating about the swing shaft 53 in the arrow X direction while being biased by the spring 54 in the direction (biasing direction of the spring 54) where the slack of the toothed belt 4 is naturally eliminated, and is thereby quickly displaced in the arrow (2) direction (see FIG. 10).

Therefore, on the slack side of the toothed belt 4, the responsiveness (operation speed) of the second tension roller 52 is also improved, and the second tension roller 52 can be maintained in a state of being in contact with the outer circumferential surface of the toothed belt 4, so that the tension of the toothed belt 4 can be automatically and appropriately maintained without generating the slack of the toothed belt 4.

iv. In the present configuration, the spring 54 is stretched between the first base shaft portion 51A and the second base shaft portion 52A of the two tension rollers (the first tension roller 51 and the second tension roller 52).

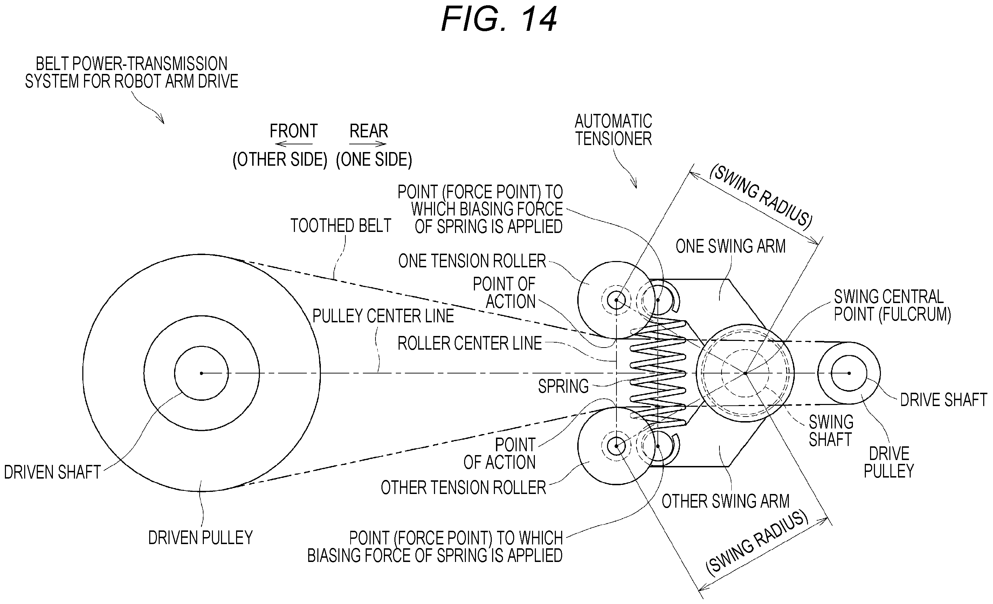

Therefore, as compared with a configuration in which even when the two tension rollers (the first tension roller 51 and the second tension roller 52) are configured to swing about the swing shaft 53 (along the plane orthogonal to the swing shaft 53), the spring 54 is not stretched between the base shaft portions of the two tension rollers [for example, a configuration in which the spring is stretched between members connecting the base shaft portions of the two tension rollers and the swing shaft (between two arm members independent of each other) (see Comparative Example B4 and FIG. 14 to be described later)], when viewed in the direction parallel to the drive shaft 21, a separation distance between the swing central point (the central axis R: a "fulcrum" on the slack side of the toothed belt 4) and a point to which the biasing force of the spring 54 is applied on the slack side of the toothed belt 4 (that is, a "force point" on the slack side of the toothed belt 4) is longer. Therefore, on the slack side of the toothed belt 4, since a larger force acts on a point where the second tension roller 52 is in contact with the toothed belt 4 on the slack side (that is, a "point of action" on the slack side of the toothed belt 4), the responsiveness (operation speed) of the second tension roller 52 is further improved on the slack side of the toothed belt 4.

v. In the configuration of Patent Literature 2, the biasing action by a spring or the like does not act between the two tension rollers. Therefore, it is impossible to adjust the tension drop occurring at the initial stage of running.

### (When Drive Pulley 2 Rotates in Direction Opposite to Arrow Z Direction in FIG. 10)

Next, when the drive pulley 2 is driven to rotate in a direction opposite to the arrow Z direction in FIG. 10, the positions of the tight side and the slack side of the toothed belt 4 become opposite to those in the above case (where the drive pulley 2 is driven to rotate in the arrow Z direction in FIG. 10). First, on the tight side of the toothed belt 4, when the second tension roller 52 is pressed by the toothed belt 4 to be displaced in the tight direction of the toothed belt 4, the second tension roller 52 swings about the swing shaft 53 via the second swing arm 57 rotating about the swing shaft 53 in the direction opposite to the arrow X direction while resisting the biasing force of the spring 54, and is thereby quickly displaced in the direction opposite to the arrow (2) direction in FIG. 10 from the position illustrated in FIG. 10 to the balanced position, next, in conjunction with this, the first tension roller 51 swings about the swing shaft 53 via the first swing arm 58 rotating about the swing shaft 53 in the direction opposite to the arrow X direction while being biased by the spring 54 in the direction (spring biasing direction) where the slack of the toothed belt 4 is naturally eliminated, and is thereby quickly displaced from the position illustrated in FIG. 10 in the direction opposite to the arrow (1) direction in FIG. 10.

Accordingly, on the tight side of the toothed belt 4, the responsiveness (operation speed) of the second tension roller 52 is improved, and the toothed belt 4 can be prevented from becoming over-tension (tension variation can be kept to be low), and on the slack side of the toothed belt 4, the responsiveness (operation speed) of the first tension roller 51 is improved, and the first tension roller 51 can be maintained in a state of being in contact with the outer circumferential surface of the toothed belt 4, so that the tension of the toothed belt 4 can be automatically and appropriately maintained without generating the slack of the toothed belt 4.

As described above, according to the present configuration, in the belt power-transmission system for robot arm drive 1, regardless of whether the drive pulley 2 rotates in the forward or reverse direction, the responsiveness to the drive at the time of forward and reverse switching (at the time of starting/stopping forward and reverse rotation) can be ensured at a high level (that is, the rotation angle difference between the drive pulley 2 and the driven pulley 3 at the time of forward and reverse switching can be sufficiently reduced), and even if the speed of the operation involving the forward and reverse rotation increases, it is possible to ensure the synchronous power-transmission [to maintain the tension of the toothed belt 4 automatically and appropriately (to the extent that the toothed belt 4 does not slack) (including adjustment of a tension drop occurring at an initial stage of running)].

The two tension rollers (the first tension roller 51 and the second tension roller 52) are provided on the drive pulley 2 side, or on the pulley side where the pulley has the smaller diameter out of the drive pulley 2 and the driven pulley 3.

In the belt power-transmission system for robot arm drive 1, in order to ensure a rotational torque of the driven pulley 3 at a predetermined level, the diameter of the drive pulley 2 is generally smaller than the diameter of the driven pulley 3 (the belt power-transmission system for robot arm drive 1 generally functions as a so-called speed reduction system), but there are cases where the diameters of the drive pulley 2 and the driven pulley 3 are the same. For example, in the belt power-transmission system 1 in which an interval between the drive pulley 2 and the driven pulley 3 is narrow and a speed reduction ratio (ratio of the pulley diameters) is large, the contact angle of the toothed belt 4 is small in the drive pulley 2 with a small diameter, and if the slack of the toothed belt 4 is large, there is a concern that the tooth jump of the toothed belt 4 is likely to occur, but according to the present configuration, in the drive pulley 2 (including the case where the drive pulley 2 and the driven pulley 3 have the same diameter) or in the pulley with a smaller diameter (regardless of the drive or driven side), it is possible to prevent a decrease in the contact angle of the toothed belt 4, and thus the tooth jump of the toothed belt 4 can be difficult to occur.

When the diameter of the drive pulley 2 of the belt power-transmission system 1 is smaller than the diameter of the driven pulley 3 (that is, when the belt power-transmission system 1 is a speed reduction system), the degree of displacement of the two tension rollers when the two tension rollers swing about the swing shaft 53 at the time of forward and reverse switching is larger than that when the diameter of the drive pulley 2 is the same as the diameter of the driven pulley 3.

Therefore, according to the present configuration, compared with a configuration in which the two tension rollers (the first tension roller 51 and the second tension roller 52) cannot swing about the swing shaft 53 (a configuration in which only the biasing force of the spring acts on the two tension rollers) and the two tension rollers can be displaced only in the direction orthogonal to the pulley center line when viewed in the direction parallel to the drive shaft, it is possible to further increase an effect that the first tension roller 51 can be more quickly displaced by swinging about the swing shaft 53 while preventing attenuation by the spring 54 (displacement in the direction for resisting the biasing force of the spring 54) on the tight side of the toothed belt 4. Further, in the belt power-transmission system for robot arm drive 1, the responsiveness to the drive at the time of forward and reverse switching (at the time of starting/stopping forward and reverse rotation) can be ensured at a higher level.

### (Another Embodiment)

In the above embodiment, the central axis R (swing central point) of the swing shaft 53 passes through a point on the pulley center line PL and separated toward the drive pulley 2 side from the intersection point of the pulley center line PL and the roller center line RL connecting the rotation center 51C of the first tension roller 51 and the rotation center 52C of the second tension roller 52, and extends in the direction parallel to the drive shaft 21.

However, the central axis R (swing central point) of the swing shaft 53 may pass through a point on the extension line of the pulley center line PL and separated toward the drive pulley 2 side from the intersection point of the pulley center line PL and the roller center line RL connecting the rotation center 51C of the first tension roller 51 and the rotation center 52C of the second tension roller 52.

Specifically, the drive shaft 21 may be disposed between the two tension rollers (the first tension roller 51 and the second tension roller 52) of the automatic tensioner 5 and the swing shaft 53.

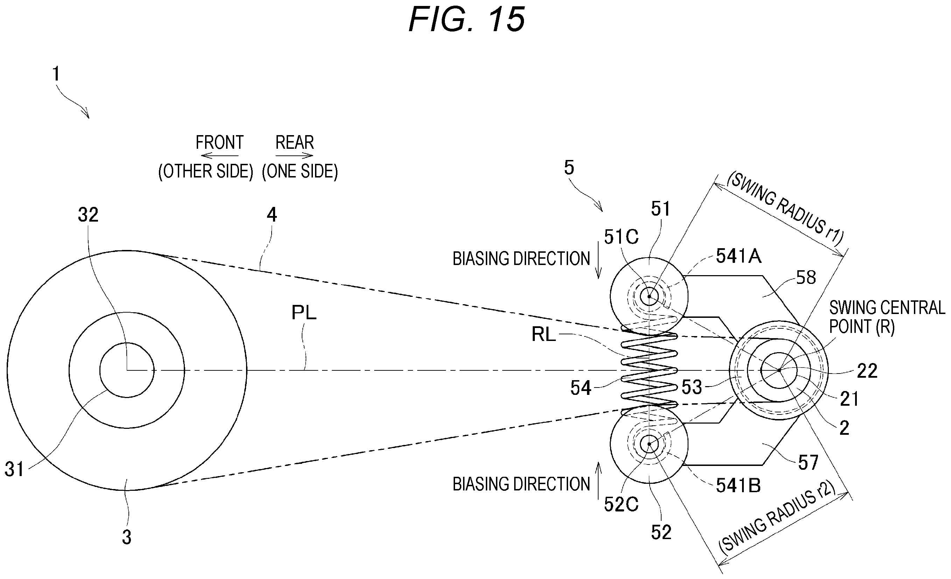

As illustrated in FIG. 15, the central axis R (swing central point) of the swing shaft 53 may be a point on the pulley center line PL and separated toward the drive pulley 2 side from the intersection point of the pulley center line PL and the roller center line RL connecting the rotation center 51C of the first tension roller 51 and the rotation center 52C of the second tension roller 52, and may pass through the central axis of the drive shaft 21 (rotation center 22 of the drive pulley 2) and extend in the direction parallel to the drive shaft 21 (that is, the drive shaft 21 may also serve as the swing shaft 53). In this case, the first swing arm 58 and the second swing arm 57 are rotatably supported by the existing drive shaft 21 via the sliding member 55 (bearing: not illustrated in FIG. 15), and it is possible to simplify the belt power-transmission system 1 (reduce the number of components and improve ease of assembly).

In the above embodiment, the belt power-transmission system according to the present invention is described as a belt power-transmission system for robot arm drive that drives a robot arm, but the present invention is not limited thereto. For example, the belt power-transmission system according to the present invention can be applied to a belt power-transmission system of an injection molding machine (a belt power-transmission system portion electrically driven by motors independent of each other in respective operation portions such as injection, metering, and mold opening and closing portions), a general industrial machine or device, or the like.

### Example

In the belt power-transmission system of the present invention, even if the speed of the operation involving the forward and reverse rotation increases, it is necessary to ensure the positioning accuracy repeatedly [that is, to ensure the responsiveness to the drive at the time of forward and reverse switching (at the time of starting/stopping forward and reverse rotation) at a high level (that is, the magnitude of the difference in the rotation angles (hereinafter, referred to as the "rotation angle difference") of the drive pulley and the driven pulley at the time of forward and reverse switching is constantly kept within an allowable range)], and it is necessary to ensure synchronous power-transmission [to ensure that the belt tension is maintained automatically and appropriately (to the extent that the belt does not slack) (including adjustment of the tension drop occurring at the initial stage of running)].

Therefore, in the present Example, belt power-transmission systems (hereinafter, referred to as respective test pieces) according to Examples A1 to A3 and Comparative Examples A1 to A3 of the first embodiment and Examples B1 to B3 and Comparative Examples B1 to B4 of the second embodiment were produced, a responsiveness test [evaluation of the responsiveness to the drive at the time of forward and reverse switching (at the time of starting/stopping forward and reverse rotation)] was performed, and comparative verification was performed.

The present invention will be described in more detail below based on Examples, but the present invention is not limited to these Examples.

### [Belt Power-Transmission System]

### (Common Among Respective Test Pieces)

### (Toothed Belt: FIG. 11)

·Shape of tooth portion: the tooth shape was an H-tooth shape belonging to a straight tooth (a shape having a substantially semicircular cross-section).
·Number of teeth: 200
·Tooth pitch: 3 mm
·Belt length: 600 mm
·Belt width: 10 mm

### [Use Material]

### (Tension Member)

·Configuration: Twisted cords of A1 to A3 each having a configuration shown in Table 2 were produced as tension members used for respective toothed belts of the respective test pieces.
·The tension member (twisted cord) of A1 was produced by the following procedure.

### Filaments (9-micron diameter) of a glass fiber (E glass fiber) called ECG-150 described in JIS R3413

(2012) were bundled and aligned to form three strands. The three strands were immersed in an RFL solution (18°C to 23°C) having a composition shown in Table 3 for 3 seconds, and then heated and dried at 200°C to 280°C for 3 minutes to uniformly form an adhesion layer on the surface. After the adhesion treatment, the three strands were primarily twisted at a number of twist of 12 times/10 cm without secondary twisting to prepare a twisted cord having a diameter of about 0.35 mm by single twist.

The tension member (twisted cord) of A2 was prepared in the same manner as in A1 except that the glass fiber was changed to KCG150.

The tension member (twisted cord) of A3 was prepared by the same procedure as that of the cords of A1 and A2 except that the used strand was one strand obtained by bundling and aligning carbon fiber filaments (3K). The tension member was made as the twisted cord of 0.53 mm in diameter by single twist.

**Table 2**

| | A1 | A2 | A3 |
|---|---|---|---|
| Material | E glass fiber | K glass fiber | Carbon fiber |
| Filament diameter (µm) | 9 | 9 | 7 |
| Name of filament | ECG150 | KCG150 | 3K |
| Configuration | 3/0 | 3/0 | 1/0 |
| Number of twist (times/10 cm) | 12 | 12 | 12 |
| Twisting method | Single twist | Single twist | Single twist |
| Tension member diameter (mm) | 0.35 | 0.35 | 0.53 |
| Elastic modulus (MPa) | 35.5 | 41.5 | 51.9 |

### (Elastic Modulus of Tension Member)

Here, a method of measuring an elastic modulus (tensile elastic modulus) of the tension member (in the longitudinal direction) shown in Table 2 will be described.

A chuck (grasping tool) is mounted to a lower fixing portion and an upper load cell connection portion of an autograph ("AGS-J10kN" manufactured by Shimadzu Corporation), and both ends of the tension member are grasped by the chuck.

Next, in a stress-strain curve measured when the tension member was pulled at a speed of 250 mm/min until the tension member was cut, an inclination of a straight line in a region (100 N to 200 N) having a comparatively linear relationship was calculated as the tensile elastic modulus of the tension member.

### (Tooth Fabric)

·A configuration of the fiber fabric used for tooth fabric of the respective test pieces was one type as follows.

A composition has 66 nylon as a weft yarn and 66 nylon as a warp yarn. In a yarn configuration, the weft yarn is a woolly processed yarn having 44 dtex and the warp yarn has 44 dtex. A weaving configuration is twill weaving. Then, the tooth fabric having the above configuration was subjected to an RFL treatment with the RFL treatment liquid shown in Table 3. Thereafter, an adhesion treatment was performed with a rubber cement in which the same rubber composition as that of the unvulcanized rubber sheet shown in Table 4 was dissolved in toluene, and the rubber composition sheets having the compositions shown in Table 4 were laminated and subjected to a coating treatment.

**Table 3**

| | Part by mass |
|---|---|
| Resorcin | 1.35 |
| Formalin (solid content concentration: 37%) | 1 |
| Vinyl pyridine latex (solid content concentration: 40%) | 130 |
| Water | 50 |

### (Rubber Composition)

·A rubber composition having the composition shown in Table 4 [rubber component: chloroprene rubber (CR)] was mixed and kneaded in a Banbury mixer, and the kneaded rubber passed through a calendar roll to form a rolled rubber sheet having a predetermined thickness, and an unvulcanized rubber sheet for forming a back portion and a tooth portion constituting each of the toothed belts of the respective test pieces was produced.
·Hardness of the vulcanized rubber sheet obtained by press-vulcanizing the prepared rubber composition (unvulcanized rubber sheet) at 165°C for 30 minutes was measured using a type A durometer at an atmospheric temperature of 23°C (23 ± 2°C) in accordance with JIS K6253 (2012), and was about 81.

In Table 4, the components indicated by X are as follows.

**Table 4**

| (Parts by mass) | | |
|---|---|---|
| | | Blending amount |
| | Chloroprene rubber (CR) 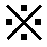 1 | 100 |
| | Adipic acid plasticizer | 8.75 |
| | Magnesium oxide | 4 |
| | Antioxidant 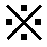 2 | 2 |
| Composition of rubber composition | Vulcanization accelerator 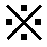 3 | 1.5 |
| | Carbon black 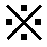 4 | 70 |
| | Inorganic filler | 35 |
| | Zinc oxide 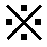 5 | 5 |
| | Sulfur | 0.5 |
| | Total | 226.75 |
| Rubber hardness (JIS A°) | | 81 |

| | | |
|---|---|---|
| 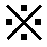 1: "PM-40" manufactured by Denka Co., Ltd. 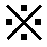 2: "Nocrac MB" manufactured by Ouchi Shinko Chemical Industrial Co., Ltd. 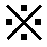 3: "N-cyclohexyl-2 benzothiazole sulfenamide" manufactured by Ouchi Shinko Chemical Industrial Co., Ltd. 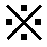 4: "Seast 3" manufactured by Tokai Carbon Co., Ltd. 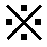 5: "Zinc Oxide Type 3" manufactured by Seido Chemical Industry Co., Ltd. | | |

### [Production of Toothed Belt]

The respective toothed belts of the respective test pieces were produced by a normal press-fitting method described in the above embodiment using the tension members (adhesion-treated products), the tooth fabric (adhesion-treated products), and the rubber compositions (unvulcanized rubber sheets) described in the above used material. The vulcanization was performed at 161°C for 25 minutes. In order to form the back portion in a predetermined thickness, a back surface of the belt sleeve obtained by the vulcanization was polished to the predetermined thickness and then cut to a predetermined width to obtain the respective toothed belts of the respective test pieces.

Since the toothed belt was produced by the normal press-fitting method, the back portion and the tooth portion were constituted by rubber compositions having the same composition. Therefore, in the respective toothed belts, the hardness of the rubber compositions constituting the back portion and the hardness of the rubber composition constituting the tooth portion are substantially the same.

### (Pulley Layout)

·Each of the belt power-transmission systems of Examples A1 to A3 (FIG. 2) and Comparative Examples A1 to A3 (not illustrated), and the belt power-transmission systems of Examples B1 to B3 (FIG. 7) and Comparative Examples B1 to B4 (Comparative Examples B1 to B3 are not illustrated, and Comparative Example B4 is illustrated in FIG. 14) had a two-axis layout in which the drive pulley and the driven pulley were toothed pulleys with straight teeth, and the drive pulley and the driven pulley were fixed between shafts, and included an axial load detector (load cell) connectable to a rotation shaft of one side (drive pulley).
·Number of teeth of drive pulley/pulley diameter (assuming tension member line): 21 teeth/20.054 mm
·Number of teeth of driven pulley/pulley diameter (assuming tension member line): 84 teeth/80.214 mm
·Speed reduction ratio: 4 (pitch diameter of driven pulley is four times larger than that of drive pulley)
·Belt mounting tension: required level of belt mounting tension was about 5 N/mm width (5 N per 1 mm width of belt).

In the present specification, tension of the belt which is measured in a stationary state immediately before actual running [after idling (breaking-in driving)] is treated as the "belt mounting tension".

The belt mounting tension was calculated from an axial load detected by the axial load detector (load cell) connected to the rotation shaft on one side (drive pulley).

·Intershaft distance was 220 mm (reference value).

### (Automatic Tensioner of First Embodiment)

### (Examples A1 to A3)

·The automatic tensioner described in the first embodiment (see FIG. 3 and FIG. 4) was applied to the belt power-transmission system in the aspect illustrated in FIG. 2. That is, the automatic tensioners of Examples A1 to A3 have the same configuration, and are automatic tensioners configured such that the biasing action of the spring (tension spring) stretched between the base shaft portions of the two tension rollers and the swing action about the swing shaft act together on the two tension rollers.

### (Comparative Example A1)

·The belt power-transmission system did not include the automatic tensioner (that is, the belt power-transmission system included only the drive pulley, the driven pulley, and the toothed belt) (not illustrated).

### (Comparative Example A2: Corresponding to Configuration in Patent Literature 1)

·Based on the automatic tensioner of Example A1 (see FIG. 3 and FIG. 4), an automatic tensioner (not illustrated) configured such that only the biasing action of the spring (tension spring) acts on the two tension rollers and the swing action about the swing shaft does not act was applied to the belt power-transmission system in the aspect (layout) illustrated in FIG. 2.

### (Comparative Example A3: Corresponding to Configuration in Patent Literature 2)

·Based on the automatic tensioner of Example A1 (see FIG. 3 and FIG. 4), an automatic tensioner (not illustrated) configured such that the biasing action of the spring does not act on the two tension rollers and only the swing action about the swing shaft acts on the belt power-transmission system in the aspect (layout) illustrated in FIG. 2 was applied.

### (Automatic Tensioner of Second Embodiment)

### (Examples B1 to B3)

·The automatic tensioner described in the second embodiment (see FIG. 8 and FIG. 9) was applied to the belt power-transmission system in the aspect illustrated in FIG. 7. That is, the automatic tensioners of Examples B1 to B3 have the same configuration, and are automatic tensioners configured such that the biasing action of the spring (tension spring) stretched between the base shaft portions of the two tension rollers and the swing action about the swing shaft act together on the two tension rollers.

### (Comparative Example B1)

·The belt power-transmission system did not include the automatic tensioner (that is, the belt power-transmission system included only the drive pulley, the driven pulley, and the toothed belt) (not illustrated).

### (Comparative Example B2: Corresponding to Configuration of Patent Literature 1)

·Based on the automatic tensioner of Example B1 (see FIG. 8 and FIG. 9), an automatic tensioner (not illustrated) configured such that only the biasing action of the spring (tension spring) acts on the two tension rollers and the swing action about the swing shaft does not act was applied to the belt power-transmission system in the aspect (layout) illustrated in FIG. 7.

### (Comparative Example B3: Corresponding to Configuration of Patent Literature 2)

·Based on the automatic tensioner of Example B1 (see FIG. 8 and FIG. 9), an automatic tensioner (not illustrated) configured such that the biasing action of the spring does not act on the two tension rollers and only the swing action about the swing shaft acts was applied to the belt power-transmission system in the aspect (layout) illustrated in FIG. 7.

### (Comparative Example B4)

As illustrated in FIG. 14, based on the automatic tensioner of Example B 1 (see FIG. 8 and FIG. 9), an automatic tensioner configured such that the biasing action of the spring (tension spring) and the swing action about the swing shaft act on both the two tension rollers, but the spring is not stretched between the base shaft portions of the two tension rollers, and is stretched between the members connecting the base shaft portions of the two tension rollers and the swing shaft (between two arm members independent of each other) was applied to the belt power-transmission system in the same aspect (layout) as in FIG. 7.

### [Evaluation of belt power-transmission system: Item, Method, Standard]

With respect to the respective test pieces (Examples A1 to A3 and B 1 to B3, Comparative Examples A1 to A3 and B 1 to B4), in order to determine whether the belt power-transmission system capable of solving the problem of the present application was obtained, a necessity of aging [whether automatic adjustment (correction) of a tension drop at the initial stage of belt running is possible] and responsiveness (responsiveness to the drive at the time of forward and reverse switching) were verified.

### [Necessity of Aging]

### [Method, Determination Criteria]

If predetermined belt mounting tension (about 5 N/mm width) can be ensured without performing aging [retensioning the belt (tension adjustment operation) by adjusting the intershaft distance or the like after the idling (breaking-in driving)], it was evaluated that the tension drop at the initial stage of the belt running can be automatically adjusted (corrected), and the determination was made as "a".

In order to ensure the predetermined belt mounting tension (about 5 N/mm width), if the aging [retensioning the belt (tension adjustment operation) by adjusting the intershaft distance or the like after the idling (breaking-in driving)] is necessary, it was evaluated that the tension drop at the initial stage of the belt running cannot be automatically adjusted (corrected), and the determination was made as "b", and the following test (responsiveness test) was not performed.

From the viewpoint of suitability (necessity of aging) for actual use in the present application, the belt power-transmission system determined as "a" was regarded as an acceptable-level.

### [Responsiveness]

### (Test Name)

### Responsiveness Test

### (Tester)

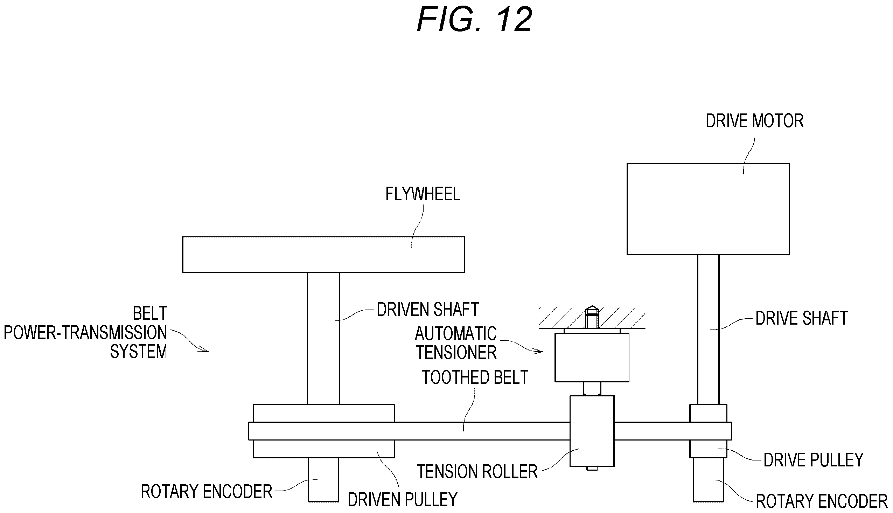

A responsiveness evaluation tester was used for the test (see FIG. 12).

The tester is configured to cause the toothed belt wound between two pulleys to run in a test pattern (cycle pattern) involving frequent forward and reverse rotation, and detect a time-series change in a rotation angle difference (a rotation angle of the drive shaft - a rotation angle of the driven shaft) during running by rotation pulse signals output from a pair of rotary encoders (rotation angle detectors) mounted to respective shafts. The pulley layout is the same as that of the above belt power-transmission system (FIG. 2 and FIG. 7). That is, the layout of the pulleys of the tester had a drive pulley and a driven pulley, and an intershaft distance was fixed at 220 mm.

In addition, assuming the present application (for robot arm drive), a flywheel was mounted to a driven side so as to be capable of applying a predetermined load torque.

Assuming the present application (for robot arm drive), in order to be able to detect the rotation angle of the drive pulley and the rotation angle of the driven pulley with high accuracy, the pair of rotary encoders used an encoder having an excellent resolution capability of the rotation angles [encoder having an angular resolution capability of 0.0044° (R-1L manufactured by CANON)].

### (Test Method)

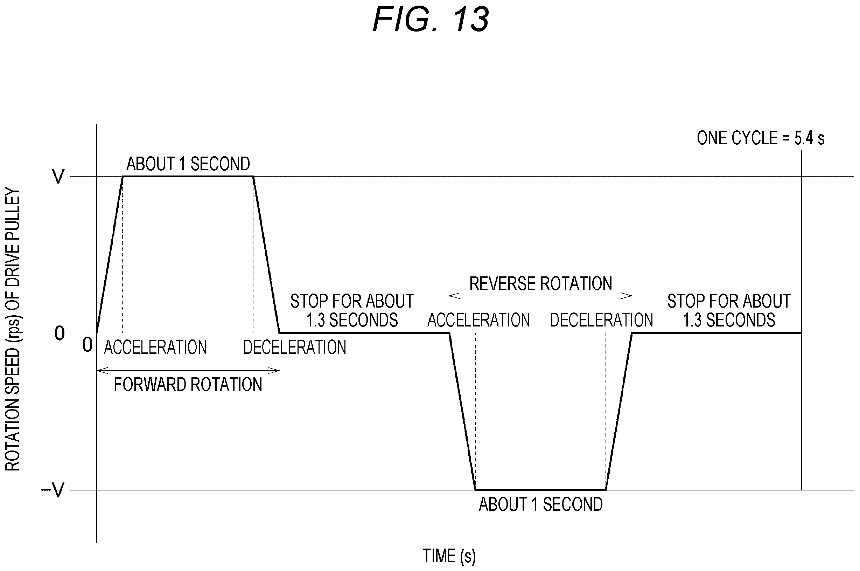

The toothed belt wound between the pulleys (having fixed intershaft distance) at predetermined belt mounting tension (about 5 N/mm width) at room temperature ran to repeat the frequent forward and reverse rotation for 250 cycles under test conditions (only the rotation speed of the drive pulley was variable) shown in Table 5 and a test pattern (cycle pattern) illustrated in FIG. 13. From the obtained graph (not illustrated) of the time-series change of the rotation angle difference, a level of the rotation angle difference (a maximum value of an absolute value) was read as a test result for each varied rotation speed (1, 2, 5 rps) of the drive pulley.

Since the rotation angle difference causes overshoot and undershoot at the time of forward and reverse switching [at the time of starting (acceleration of)/stopping (deceleration of) the forward and reverse rotation] in time series, the absolute value thereof becomes maximum at the time of forward and reverse switching (frequency: 4 times per cycle). Tables 6 and 7 show acceleration or deceleration speeds at the time of forward and reverse switching corresponding to each of the rotation speeds of the drive pulley.

**Table 5**

| | |
|---|---|
| Belt mounting tension | 50 N (5 N/mm width) |
| Number of teeth of drive pulley | 21 teeth |
| Number of teeth of driven pulley | 84 teeth |
| Rotation speed V (variable) of drive shaft | 1, 2, and 5 rps (forward and reverse) |
| Acceleration and deceleration time | About 0.2 seconds |
| Load torque | 80 g·m |
| Cycle pattern | See FIG. 13 |
| Number of cycles | 250 cycles |

### (Determination Criteria)

In the determination of the responsiveness (responsiveness to the drive at the time of forward and reverse switching) which is the most important for the belt power-transmission system in the present application, the rotation angle difference between the drive pulley and the driven pulley at the time of forward and reverse switching was used as an index (the smaller the absolute value is, the higher the responsiveness is, the positioning accuracy can be repeatedly ensured, and synchronous power-transmission can be ensured), and a case where the rotation angle difference (absolute value) for each of the rotation speeds of the drive pulley was always 0.2° or less was determined as "a", and a case where the rotation angle difference exceeded 0.2° even once was determined as "b".

From the viewpoint of suitability (responsiveness) for actual use in the present application, the belt power-transmission system determined as "a" was regarded as an acceptable-level.

### [Comprehensive Determination]

Criteria of comprehensive determination (ranking) of a belt power-transmission system that can solve this problem are as follows based on the results of the determination in the above two test items (necessity of aging and responsiveness).

Rank A: If all of the above evaluations (necessity of aging and responsiveness) were determined as "a", the product was ranked as fully satisfactory as a solution to the present problem (passed).

Rank B: If even one of the evaluations (necessity of aging and responsiveness) was determined as "b", the product was ranked as "insufficient" as a solution to the present problem (failed).

### [Verification Results]

Verification results are shown in Tables 6 and 7.

**Table 6**

| | | Ex. | | | Ex. | | | Ex. | | |
|---|---|---|---|---|---|---|---|---|---|---|
| | | A1 | | | A2 | | | A3 | | |
| Toothed belt | Tension member type (material of filament) | A1 | | | A2 | | | A3 | | |
| Automatic tensioner | Whether mounting | Present | | | Present | | | Present | | |
| | Biasing action of spring | Present | | | Present | | | Present | | |
| | Swing action about swing shaft | Present | | | Present | | | Present | | |
| Evaluation of belt power-transmission system | Necessity of aging | Unnecessary | | | Unnecessary | | | Unnecessary | | |
| | Determination | a | | | a | | | a | | |
| | Rotation speed V (rps) of drive shaft | 1 | 2 | 5 | 1 | 2 | 5 | 1 | 2 | 5 |
| | Acceleration or deceleration speed (rotation/s²) at the time of forward and reverse switching | 5 | 10 | 25 | 5 | 10 | 25 | 5 | 10 | 25 |
| | Rotation angle difference (°) (maximum value of absolute value) | 0.05 | 0.09 | 0.15 | 0.04 | 0.08 | 0.13 | 0.03 | 0.06 | 0.10 |
| | Determination | a | | | a | | | a | | |
| Comprehensive determination (rank) | | A | | | A | | | A | | |

**Table 6 (Continued)**

| | | Comp. Ex. | Comp. Ex. | | | Comp. Ex. |
|---|---|---|---|---|---|---|
| | | A1 | A2 | | | A3 |
| Toothed belt | Tension member type (material of filament) | A1 | A1 | | | A1 |
| Automatic tensioner | Whether mounting | Absent | Present | | | Present |
| | Biasing action of spring | - | Present | | | Absent |
| | Swing action about swing shaft | - | Absent | | | Present |
| Evaluation of belt power-transmission system | Necessity of aging | Necessary | Unnecessary | | | Necessary |
| | Determination | b | a | | | b |
| | Rotation speed V (rps) of drive shaft | - | 1 | 2 | 5 | - |
| | Acceleration or deceleration speed (rotation/s²) at the time of forward and reverse switching | - | 5 | 10 | 25 | - |
| | Rotation angle difference (°) (maximum value of absolute value) | - | 0.30 | 0.37 | 0.45 | - |
| | Determination | - | b | | | - |
| Comprehensive determination (rank) | | B | B | | | B |

**Table 7**

| | | Ex. | | | Ex. | | | Ex. | | |
|---|---|---|---|---|---|---|---|---|---|---|
| | | B1 | | | B2 | | | B3 | | |
| Toothed belt | Tension member type (material of filament) | A1 | | | A2 | | | A3 | | |
| Automatic tensioner | Whether mounting | Present | | | Present | | | Present | | |
| | Biasing action of spring | Present | | | Present | | | Present | | |
| | Swing action about swing shaft | Present | | | Present | | | Present | | |
| | Stretched position of spring | Between base shaft portions of two tension rollers | | | Between base shaft portions of two tension rollers | | | Between base shaft portions of two tension rollers | | |
| Evaluation of belt power-transmission system | Necessity of aging | Unnecessary | | | Unnecessary | | | Unnecessary | | |
| | Determination | a | | | a | | | a | | |
| | Rotation speed V (rps) of drive shaft | 1 | 2 | 5 | 1 | 2 | 5 | 1 | 2 | 5 |
| | Acceleration or deceleration speed (rotation/s²) at the time of forward and reverse switching | 5 | 10 | 25 | 5 | 10 | 25 | 5 | 10 | 25 |
| | Rotation angle difference (°) (maximum value of absolute value) | 0.05 | 0.09 | 0.15 | 0.04 | 0.08 | 0.13 | 0.03 | 0.06 | 0.10 |
| | Determination | a | | | a | | | a | | |
| Comprehensive determination (rank) | | A | | | A | | | A | | |

**Table 7 (Continued)**

| | | Comp. Ex. | Comp. Ex. | | | Comp. Ex. | Comp. Ex. | | |
|---|---|---|---|---|---|---|---|---|---|
| | | B1 | B2 | | | B3 | B4 | | |
| Toothed belt | Tension member type (material of filament) | A1 | A1 | | | A1 | A1 | | |
| Automatic tensioner | Whether mounting | Absent | Present | | | Present | Present | | |
| | Biasing action of spring | - | Present | | | Absent | Present | | |
| | Swing action about swing shaft | - | Absent | | | Present | Present | | |
| | Stretched position of spring | - | Between base shaft portions of two tension rollers | | | - | Between two arm members | | |
| Evaluation of belt power-transmission system | Necessity of aging | Necessary | Unnecessary | | | Necessary | Unnecessary | | |
| | Determination | b | a | | | b | a | | |
| | Rotation speed V (rps) of drive shaft | - | 1 | 2 | 5 | - | 1 | 2 | 5 |
| | Acceleration or deceleration speed (rotation/s²) at the time of forward and reverse switching | - | 5 | 10 | 25 | - | 5 | 10 | 25 |
| | Rotation angle difference (°) (maximum value of absolute value) | - | 0.30 | 0.37 | 0.45 | - | 0.15 | 0.22 | 0.30 |
| | Determination | - | b | | | - | b | | |
| Comprehensive determination (rank) | | B | B | | | B | B | | |

### (Comparison in which Configuration of Automatic Tensioner of First Embodiment was Changed: Example A1, Comparative Examples A1 to A3)

The configuration of the automatic tensioner (including whether the automatic tensioner is mounted) was changed and compared based on the automatic tensioner of Example A1 (configured such that the biasing action of the spring stretched between the base shaft portions of the two tension rollers and the swing action about the swing shaft act together on the two tension rollers). In the case (Example A1 and Comparative Example A2) where the belt power-transmission system includes the automatic tensioner in which the biasing action of the spring acts on the two tension rollers, the aging is unnecessary (determined as "a"), in Example A1 in which not only the biasing action of the spring but also the swing action about the swing shaft acts on the two tension rollers, the responsiveness was also determined as "a" (also rank A in the comprehensive determination), but in Comparative Example A2 in which only the biasing action of the spring acts on the two tension rollers and the swing action about the swing shaft does not act on the two tension rollers, the responsiveness was determined as "b" (also rank B in the comprehensive determination).

On the other hand, in Comparative Example A1 in which the belt power-transmission system does not have the automatic tensioner, and in Comparative Example A3 in which the belt power-transmission system has the automatic tensioner in which the biasing action of the spring does not act on the two tension rollers and only the swing action about the swing shaft acts on the two tension rollers, the aging was necessary (determined as "b"), and the comprehensive determination was rank B.

### (Comparison in which Tension Member Types of Toothed Belts were Changed: Examples A1 to A3)

The fiber material (material of the filament) constituting the tension member of the toothed belt was changed and compared based on the toothed belt (E glass fiber: A1) of Example A1. In Example A2 in which a tension member of a high-strength glass fiber (K glass fiber: A2) having a larger elastic modulus than that of Example A1 was used, and Example A3 in which a tension member of a carbon fiber (A3) having a larger elastic modulus than that of Example A2 was used, there is a tendency that the higher the elastic modulus and the lower the elongation of the tension member (that is, the belt), the lower the level of the rotation angle difference (maximum value of the absolute value) for each of the rotation speeds of the drive pulley, and the higher the responsiveness (responsiveness to the drive at the time of forward and reverse switching), and rank A was made under these conditions (Examples A1 to A3).

### (Obtained Effects)

From the above verification results, when the belt power-transmission systems of Examples A1 to A3 are applied to a belt power-transmission system driven to be capable of forward and reverse rotation in a robot arm drive application or the like, since the automatic tensioner configured such that the biasing action of the spring (tension spring) stretched between the base shaft portions of the two tension rollers and the swing action about the swing shaft act together on the two tension rollers is provided, it is possible to ensure predetermined belt mounting tension (about 5 N/mm width) and automatically adjust (correct) a tension drop at the initial stage of belt running without performing the aging [retensioning the belt (tension adjustment operation) by adjusting the intershaft distance or the like after the idling (breaking-in driving)], and to constantly keep the rotation angle difference (absolute value) serving as an index of responsiveness to the drive at the time of forward and reverse switching within an allowable range (within 0.2°), and thus, it is possible to repeatedly ensure the positioning accuracy and ensure the synchronous power-transmission even if the speed of the operation involving the forward and reverse rotation increases.

### (Comparison in which Configuration of Automatic Tensioner of Second Embodiment was Changed: Example B1, Comparative Examples B1 to B4)

The configuration of the automatic tensioner (including whether the automatic tensioner is mounted) was changed and compared based on the automatic tensioner of Example B 1 (configured such that the biasing action of the spring stretched between the base shaft portions of the two tension rollers and the swing action about the swing shaft act together on the two tension rollers). In the case (Example B1 and Comparative Examples B2 and B4) where the belt power-transmission system includes the automatic tensioner in which the biasing action of the spring acts on the two tension rollers, the aging is unnecessary (determined as "a"), in Example B 1 in which not only the biasing action of the spring but also the swing action about the swing shaft acts on the two tension rollers, the responsiveness is also determined as "a" (also rank A in the comprehensive determination), but in Comparative Example B2 in which only the biasing action of the spring acts on the two tension rollers and the swing action about the swing shaft does not act on the two tension rollers, and in Comparative Example B4 in which not only the biasing action of the spring but also the swing action about the swing shaft acts on the two tension rollers, but the spring is not stretched between the base shaft portions of the two tension rollers, the responsiveness is determined as "b" (also rank B in the comprehensive determination).

On the other hand, in Comparative Example B 1 in which the belt power-transmission system does not have the automatic tensioner, and in Comparative Example B3 in which the belt power-transmission system has the automatic tensioner in which the biasing action of the spring does not act on the two tension rollers and only the swing action about the swing shaft acts on the two tension rollers, the aging was necessary (determined as "b"), and the comprehensive determination was rank B.

### (Comparison in which Tension Member Types of Toothed Belts were Changed: Examples B1 to B3)

The fiber material (material of the filament) constituting the tension member of the toothed belt was changed and compared based on the toothed belt (E glass fiber: A1) of Example B1. In Example B2 in which a tension member of a high-strength glass fiber (K glass fiber: A2) having a larger elastic modulus than that of Example B1 was used, and Example B3 in which a tension member of a carbon fiber (A3) having a larger elastic modulus than that of Example B2 was used, there is a tendency that the higher the elastic modulus and the lower the elongation of the tension member (that is, the belt), the lower the level of the rotation angle difference (maximum value of the absolute value) for each of the rotation speeds of the drive pulley, and the higher the responsiveness (responsiveness to the drive at the time of forward and reverse switching), and rank A was made under these conditions (Examples B1 to B3).

### (Obtained Effects)

From the above verification results, when the belt power-transmission systems of Examples B1 to B3 are applied to a belt power-transmission system driven to be capable of forward and reverse rotation in a robot arm drive application or the like, since the automatic tensioner configured such that the biasing action of the spring (tension spring) stretched between the base shaft portions of the two tension rollers and the swing action about the swing shaft act together on the two tension rollers is provided, it is possible to ensure predetermined belt mounting tension (about 5 N/mm width) and automatically adjust (correct) a tension drop at the initial stage of belt running without performing the aging [retensioning the belt (tension adjustment operation) by adjusting the intershaft distance or the like after the idling (breaking-in driving)], and to constantly keep the rotation angle difference (absolute value) serving as an index of responsiveness to the drive at the time of forward and reverse switching within an allowable range (within 0.2°), and thus, it is possible to repeatedly ensure the positioning accuracy and ensure the synchronous power-transmission even if the speed of the operation involving the forward and reverse rotation increases.

Although the present invention has been described in detail with reference to specific embodiments, it is apparent to those skilled in the art that various modifications and changes can be made without departing from the spirit and scope of the present invention.

The present application is based on Japanese Patent Application No. 2022-28047 filed on February 25, 2022, Japanese Patent Application No. 2022-38993 filed on March 14, 2022, Japanese Patent Application No. 2022-171321 filed on October 26, 2022, Japanese Patent Application No. 2022-181730 filed on November 14, 2022, Japanese Patent Application No. 2023-17716 filed on February 8, 2023, and Japanese Patent Application No. 2023-17775 filed on February 8, 2023, and the contents thereof are incorporated herein by reference.

### REFERENCE SIGNS LIST

1: belt power-transmission system
11: second arm
2: drive pulley
21: drive shaft
22: rotation center
3: driven pulley
31: driven shaft
32: rotation center
4: toothed belt
5: automatic tensioner
51: first tension roller
51A: first base shaft portion
52: second tension roller
52A: second base shaft portion
53: swing shaft
54: spring
55: sliding member
56: swing holder
R: central axis
PL: pulley center line
RL: roller center line
58: first swing arm
581: tip end portion
582: base end portion
57: second swing arm
571: tip end portion
572: base end portion

## Claims

1. A belt power-transmission system comprising:
a drive pulley fixed to a drive shaft that is driven so as to be capable of forward and reverse rotation by a drive source;
a driven pulley that is rotatably supported;
a toothed belt wound between the drive pulley and the driven pulley; and
an automatic tensioner configured to automatically and appropriately maintain tension of the toothed belt via two tension rollers that are provided rotatably about respective base shaft portions at positions on both sides sandwiching a pulley center line connecting a rotation center of the drive pulley and a rotation center of the driven pulley, and are in contact with the toothed belt, wherein
the automatic tensioner comprises:
a swing shaft that passes through a point on the pulley center line or a point on an extension line of the pulley center line and extends in a direction parallel to the drive shaft; and
a spring that is stretched between the base shaft portions of the two tension rollers and biases the two tension rollers in a direction toward each other or a direction away from each other along a roller center line, and
the two tension rollers are configured to swing about the swing shaft.

2. The belt power-transmission system according to claim 1, wherein
the swing shaft passes through an intersection point of the pulley center line and the roller center line connecting rotation centers of the two tension rollers.

3. The belt power-transmission system according to claim 1, wherein
the swing shaft passes through the point on the pulley center line or the point on the extension line of the pulley center line, the point being separated toward a drive pulley side from an intersection point of the pulley center line and the roller center line connecting rotation centers of the two tension rollers.

4. The belt power-transmission system according to claim 2, wherein
the automatic tensioner comprises a swing holder that slidably accommodates the respective base shaft portions of the two tension rollers along the roller center line and is rotatably supported with respect to the swing shaft, and
the two tension rollers swing about the swing shaft via the swing holder.

5. The belt power-transmission system according to claim 3, wherein
the automatic tensioner comprises:
a first swing arm in which one end portion thereof is provided with the base shaft portion of one of the tension rollers, and the other end portion is rotatably supported with respect to the swing shaft; and
a second swing arm in which one end portion thereof is provided with the base shaft portion of the other tension roller, and the other end portion is rotatably supported with respect to the swing shaft, and
the two tension rollers swing about the swing shaft via the first swing arm and the second swing arm.

6. The belt power-transmission system according to any one of claims 1 to 5, wherein
the spring is a tension spring, and
the two tension rollers are provided so as to be in contact with an outer circumferential surface of the toothed belt.

7. The belt power-transmission system according to any one of claims 1 to 6, wherein
the two tension rollers are provided on a drive pulley side, or on a pulley side where the pulley has a smaller diameter out of the drive pulley and the driven pulley.

8. The belt power-transmission system according to any one of claims 1 to 7, wherein
a diameter of the drive pulley is smaller than a diameter of the driven pulley.

9. The belt power-transmission system according to any one of claims 1 to 8, wherein
the drive pulley and the driven pulley are fixed to a robot arm and drive the robot arm.
